# EUROPEAN PATENT APPLICATION

(11) **EP 4 772 401 A1**
(43) Date of publication of application: **08.07.2026**
(21) Application number: 24858623.2
(22) Date of filing: 28.08.2024
(51) Int. Cl.: B60R 11/02, B60N 2/75

(54) **SEAT ARMREST, SEAT, VEHICLE, POSTURE ADJUSTMENT ASSEMBLY AND SEAT ARMREST SCREEN**

(30) Priority: 31.08.2023 CN 202311127490
(71) Applicant: BYD Company Limited, Shenzhen, Guangdong 518118 (CN)
(72) Inventor: ZHANG, Xiaoru, Shenzhen, Guangdong 518118 (CN); SHUANG, Lu, Shenzhen, Guangdong 518118 (CN); DU, Zhengqiang, Shenzhen, Guangdong 518118 (CN); CUI, Chao, Shenzhen, Guangdong 518118 (CN)
(74) Representative: Mathys & Squire
(86) International application number: PCT/CN2024/115160
(87) International publication number: WO 2025/045089

(57) **Abstract**

A vehicle is provided. The vehicle includes a seat. The seat includes a seat armrest and a seat armrest screen. The seat armrest screen includes a posture adjustment assembly for a display screen. The seat armrest includes an armrest body, the posture adjustment assembly, and the display screen. The armrest body has a screen mounting surface provided with a storage recess. The posture adjustment assembly is arranged on the armrest body. The display screen has a display surface and is mounted on the posture adjustment assembly. The posture adjustment assembly drives the display screen to flip between a storage position and an extension position. When the display screen is in the storage position, the display screen is accommodated in the storage recess, and the display surface is flush with the screen mounting surface. When the display screen is in the extension position, at least part of the display screen is located outside the storage recess, and an edge of the display surface adjacent to the screen mounting surface constitutes a flip edge that is flush with the screen mounting surface.

## Description

### CROSS REFERENCE TO RELATED APPLICATIONS

This application claims priority to Chinese Patent Application No. 202311127490.7, entitled "SEAT ARMREST, SEAT, VEHICLE, POSTURE ADJUSTMENT ASSEMBLY, AND SEAT ARMREST SCREEN" and filed with the China National Intellectual Property Administration on August 31, 2023, which is incorporated herein by reference in its entirety.

### TECHNICAL FIELD

The present disclosure relates to the field of vehicle technologies, and in particular, to a seat armrest, a seat, a vehicle, a posture adjustment assembly, and a seat armrest screen.

### BACKGROUND

In the related art, a seat armrest is usually provided with a display screen, and the display screen can move relative to a main body of the seat armrest to be lifted for user viewing. However, in the related art, the display screen requires a relatively large accommodation space and lifting space, which is not conducive to saving interior space of a car. In addition, during lifting of the display screen, the screen moves forward in its entirety and a position of a flip edge of the screen goes downward, affecting the user's viewing experience. Moreover, a gap between the display screen and the main body of the seat armrest becomes smaller, potentially causing hand pinching, and leading to poor overall dustproof and waterproof performance of the seat armrest.

### SUMMARY

The present disclosure aims to resolve at least one of the technical problems existing in the related art. In view of this, an objective of the present disclosure is to provide a seat armrest. The seat armrest can accommodate and lift a display screen, and the display screen requires relatively small space for movement, offering advantages such as small occupation space, easy viewing, and clear and neat appearance.

The present disclosure further provides a seat that has the foregoing seat armrest.

The present disclosure further provides a vehicle that has the foregoing seat.

The present disclosure further provides a posture adjustment assembly for the display screen.

The present disclosure further provides a seat armrest screen that has the foregoing posture adjustment assembly for the display screen.

To achieve the foregoing objective, according to an embodiment of a first aspect of the present disclosure, a seat armrest is provided, including: an armrest body, the armrest body having a screen mounting surface, and the screen mounting surface being provided with a storage recess; a posture adjustment assembly, the posture adjustment assembly being arranged on the armrest body; and a display screen, the display screen having a display surface, the display screen being mounted on the posture adjustment assembly, and the posture adjustment assembly driving the display screen to flip between a storage position and an extension position. When the display screen is in the storage position, the display screen is accommodated in the storage recess, and the display surface is flush with the screen mounting surface. When the display screen is in the extension position, at least part of the display screen is located outside the storage recess, an edge of the display surface adjacent to the screen mounting surface constitutes a flip edge, and the flip edge is flush with the screen mounting surface.

The seat armrest according to this embodiment of the present disclosure can accommodate and lift the display screen, and the display screen requires relatively small space for movement, offering advantages such as small occupation space, easy viewing, and clear and neat appearance.

According to some embodiments of the present disclosure, a flip axis of the display screen coincides with the flip edge of the display surface.

According to some embodiments of the present disclosure, the posture adjustment assembly includes a support. The support is connected to the display screen. The support includes an arc-shaped plate section. The support drives the display screen to flip around a central axis of the arc-shaped plate section. The central axis of the arc-shaped plate section coincides with the flip edge of the display surface.

According to some embodiments of the present disclosure, when the display screen is in the storage position, the arc-shaped plate section is located inside the armrest body.

According to some embodiments of the present disclosure, the seat armrest further includes a cover plate. The cover plate is mounted on the display screen. When the display screen is in the storage position, the cover plate is located in the storage recess. When the display screen is in the extension position, the cover plate covers a portion of the support that extends out of the storage recess.

According to some embodiments of the present disclosure, the posture adjustment assembly further includes a slide rail bracket. A relative position between the slide rail bracket and the armrest body is fixed. The slide rail bracket is configured with an arc-shaped guide cavity. The arc-shaped plate section of the support is slidably fitted in the arc-shaped guide cavity to define rotation of the support around the central axis of the arc-shaped plate section.

According to some embodiments of the present disclosure, damping members are arranged between the arc-shaped plate section and an inner wall of the arc-shaped guide cavity. The damping member is configured to apply a damping force to the support.

According to some embodiments of the present disclosure, the damping members are respectively arranged on two axial sides of the arc-shaped plate section.

According to some embodiments of the present disclosure, the damping members are damping sleeves. Insertion blocks are arranged on the two axial sides of the arc-shaped plate section. The insertion blocks are inserted into the damping sleeves. The arc-shaped guide cavity has a first arc-shaped guide wall and a second arc-shaped guide wall. The first arc-shaped guide wall and the second arc-shaped guide wall are respectively arranged on two sides of the arc-shaped plate section in a thickness direction of the arc-shaped plate section. Each of the damping members is in contact engagement with the first arc-shaped guide wall and the second arc-shaped guide wall.

According to some embodiments of the present disclosure, the posture adjustment assembly further includes a housing, the housing being mounted on the armrest body; a drive mechanism, the drive mechanism being mounted on the housing; and a transmission mechanism, the transmission mechanism being in transmission connection with the drive mechanism and the support. The drive mechanism drives, through the transmission mechanism, the support to rotate around the central axis of the arc-shaped plate section to drive the display screen to flip between the storage position and the extension position.

According to some embodiments of the present disclosure, the transmission mechanism includes a gear sleeve. The gear sleeve is in transmission connection with the drive mechanism. An outer circumferential surface of the gear sleeve is provided with first engaging teeth. An outer circumferential surface of the arc-shaped plate section is provided with second engaging teeth. The first engaging teeth are engaged with the second engaging teeth.

According to some embodiments of the present disclosure, the transmission mechanism further includes a gear shaft. The gear sleeve is in transmission connection with the drive mechanism through the gear shaft. The gear sleeve is sleeved over the gear shaft and rotates synchronously with the gear shaft.

According to some embodiments of the present disclosure, the transmission mechanism further includes an axial limiting mechanism. The axial limiting mechanism is arranged on the gear shaft and fits the gear sleeve. The axial limiting mechanism fixes a position of the gear sleeve in an axial direction of the gear shaft.

According to some embodiments of the present disclosure, the axial limiting mechanism includes: a ring piece, the ring piece being arranged on an outer circumferential surface of the gear shaft; and a fastener, the fastener being mounted on the gear shaft, and the gear sleeve being defined between the ring piece and the fastener in the axial direction of the gear shaft.

According to some embodiments of the present disclosure, the transmission mechanism further includes an elastic member. The elastic member is sleeved over the gear shaft and abuts between the gear sleeve and the fastener.

According to some embodiments of the present disclosure, the transmission mechanism further includes a spacer. The spacer is sleeved over the gear shaft and located between the elastic member and the gear sleeve.

According to some embodiments of the present disclosure, the transmission mechanism further includes: a transmission block, the transmission block being sleeved over the gear shaft, and the transmission block being located between the gear sleeve and the ring piece and rotating synchronously with the gear shaft; and a friction piece, the friction piece being arranged between the transmission block and the gear sleeve, and the transmission block transferring rotation of the gear shaft to the gear sleeve through the friction piece.

According to some embodiments of the present disclosure, one of the ring piece and the transmission block is provided with clamping slots and the other is provided with clamping teeth. The clamping teeth are inserted into the clamping slot to cause the transmission block to rotate synchronously with the gear shaft.

According to some embodiments of the present disclosure, the plurality of clamping slots are spaced apart along a circumferential direction of the ring piece. The plurality of clamping teeth are spaced apart along a circumferential direction of the transmission block. The plurality of clamping teeth are inserted into the plurality of clamping slots in a one-to-one correspondence.

According to some embodiments of the present disclosure, the transmission mechanism further includes: a transmission block, the transmission block being sleeved over the gear shaft, and the transmission block being located between the gear sleeve and the ring piece and rotating synchronously with the gear shaft; and a clutch apparatus, the clutch apparatus being arranged between the transmission block and the gear sleeve, and the clutch apparatus controlling whether power is to be transferred between the transmission block and the gear sleeve.

According to some embodiments of the present disclosure, the outer circumferential surface of the gear shaft is provided with a recess, the fastener is a circlip, and the circlip is engaged in the recess.

According to some embodiments of the present disclosure, the drive mechanism is a motor, the posture adjustment assembly further includes a speed reduction and torque increase mechanism, and the gear shaft is in transmission connection with the drive mechanism through the speed reduction and torque increase mechanism. The speed reduction and torque increase mechanism includes: a first-stage worm, the first-stage worm being sleeved over a motor shaft of the motor and being driven by the motor shaft to rotate; a first-stage gear, the first-stage gear being mounted on the housing and engaged with the first-stage worm; a second-stage worm, the second-stage worm being mounted on the housing and rotating synchronously with the first-stage gear; and a second-stage gear, the second-stage gear being sleeved over the gear shaft and rotating synchronously with the gear shaft, and the second-stage gear being engaged with the second-stage worm.

According to some embodiments of the present disclosure, a central axis of the first-stage worm coincides with a central axis of the motor shaft. A central axis of the first-stage gear coincides with a central axis of the second-stage worm and is perpendicular to the central axis of the first-stage worm. A central axis of the second-stage gear coincides with a central axis of the gear shaft and is perpendicular to the second-stage worm.

According to some embodiments of the present disclosure, one of the outer circumferential surface of the gear shaft and an inner circumferential surface of the second-stage gear is provided with transmission ribs and the other is provided with transmission grooves. The transmission ribs are inserted into the transmission grooves to cause the second-stage gear to rotate synchronously with the gear shaft.

According to some embodiments of the present disclosure, the plurality of transmission ribs are spaced apart along a circumferential direction of the gear shaft. The plurality of transmission grooves are arranged along a circumferential direction of the second-stage gear. The plurality of transmission ribs are inserted into the plurality of transmission grooves in a one-to-one correspondence.

According to some embodiments of the present disclosure, the transmission ribs are each arranged on the outer circumferential surface of the gear shaft. The transmission ribs each have a guide portion at an end facing away from the gear sleeve. The guide portion has a height gradually decreasing in a direction away from the gear sleeve.

According to some embodiments of the present disclosure, the housing is configured with a first limiting surface and a second limiting surface. The support abuts against the first limiting surface when the display screen flips from the extension position to the storage position. The support abuts against the second limiting surface when the display screen flips from the storage position to the extension position.

According to some embodiments of the present disclosure, the support further includes a limiting folding plate. The limiting folding plate is connected to a side of the arc-shaped plate section away from the display screen in an arc length direction. The limiting folding plate abuts against the second limiting surface when the display screen flips from the storage position to the extension position.

According to some embodiments of the present disclosure, the posture adjustment assembly further includes: a circuit board, the circuit board being mounted on the housing and connected to the drive mechanism; and a potentiometer, the potentiometer being mounted on the circuit board, the potentiometer having a detection gear, and the detection gear being engaged with the first engaging teeth to detect rotation angle information of the gear sleeve and save the rotation angle information to the circuit board.

According to some embodiments of the present disclosure, the housing includes: an upper cover and a lower cover, the upper cover and the lower cover being connected to each other and jointly defining a mounting cavity; a mounting bracket, the mounting bracket and the circuit board being mounted on the lower cover and located in the mounting cavity, and the drive mechanism and the transmission mechanism being mounted on the mounting bracket; and a slide rail bracket, the slide rail bracket being mounted on the mounting bracket, the slide rail bracket and the lower cover being respectively arranged on two opposite sides of the mounting bracket, and the arc-shaped plate section fitting the slide rail bracket to define rotation of the support around the central axis of the arc-shaped plate section.

According to some embodiments of the present disclosure, the seat armrest further includes a gesture acquisition apparatus. The gesture acquisition apparatus is connected to the posture adjustment assembly. The posture adjustment assembly drives, based on gesture information acquired by the gesture acquisition apparatus, the display screen to flip between the storage position and the extension position.

According to some embodiments of the present disclosure, the seat armrest further includes a fingerprint acquisition apparatus. The fingerprint acquisition apparatus is connected to the posture adjustment assembly. The posture adjustment assembly drives, based on fingerprint information acquired by the fingerprint acquisition apparatus, the display screen to flip between the storage position and the extension position.

According to an embodiment of a second aspect of the present disclosure, a seat is provided, including the seat armrest according to the embodiment of the first aspect of the present disclosure.

According to the seat in the embodiment of the second aspect of the present disclosure, through use of the seat armrest according to the embodiment of the first aspect of the present disclosure, the display screen can be accommodated and lifted, and the display screen requires relatively small space to move, offering advantages such as small occupation space, easy viewing, and clear and neat appearance.

According to an embodiment of a third aspect of the present disclosure, a vehicle is provided, including the seat according to the embodiment of the second aspect of the present disclosure.

According to the vehicle in the embodiment of the third aspect of the present disclosure, through use of the seat according to the embodiment of the second aspect of the present disclosure, the display screen can be accommodated and lifted, and the display screen requires relatively small space to move, offering advantages such as small occupation space, easy viewing, and clear and neat appearance.

Additional aspects and advantages of the present disclosure are to be partially provided in the following description, and partially become evident in the following description, or be understood through the practice of the present disclosure.

### BRIEF DESCRIPTION OF DRAWINGS

The foregoing and/or additional aspects and advantages of the present disclosure are to become apparent and readily understandable from the description of the embodiments with reference to the following accompanying drawings.
FIG. 1 is a diagram of a structure of a seat armrest according to an embodiment of the present disclosure;
FIG. 2 is a diagram of a structure of a display screen and a posture adjustment assembly when the display screen is in a storage position according to an embodiment of the present disclosure;
FIG. 3 is a diagram of a structure of the display screen and the posture adjustment assembly when the display screen is in an extension position according to an embodiment of the present disclosure;
FIG. 4 is an exploded view of the display screen and the posture adjustment assembly according to an embodiment of the present disclosure;
FIG. 5 is a detailed view of A in FIG. 4;
FIG. 6 is an exploded view of the posture adjustment assembly according to an embodiment of the present disclosure;
FIG. 7 is a schematic structural diagram of a clutch apparatus according to an embodiment of the present disclosure;
FIG. 8 is a cross-sectional view of the display screen and the posture adjustment assembly when the display screen is in the storage position according to an embodiment of the present disclosure;
FIG. 9 is a cross-sectional view of the display screen and the posture adjustment assembly when the display screen is in the extension position according to an embodiment of the present disclosure;
FIG. 10 is a diagram of a structure of a transmission mechanism, a speed reduction and torque increase mechanism, and a circuit board according to an embodiment of the present disclosure;
FIG. 11 is a cross-sectional view of the posture adjustment assembly according to an embodiment of the present disclosure;
FIG. 12 is an exploded view of a posture adjustment assembly according to another embodiment of the present disclosure;
FIG. 13 is a cross-sectional view of a display screen and a posture adjustment assembly when the display screen is in a storage position according to another embodiment of the present disclosure;
FIG. 14 is a cross-sectional view of the display screen and the posture adjustment assembly when the display screen is in the extension position according to another embodiment of the present disclosure;
FIG. 15 is a diagram of a structure of the display screen and the posture adjustment assembly when the display screen is in the storage position according to another embodiment of the present disclosure;
FIG. 16 is a diagram of a structure of the display screen and the posture adjustment assembly when the display screen is in the extension position according to another embodiment of the present disclosure;
FIG. 17 is a diagram of a structure of the display screen and the posture adjustment assembly according to another embodiment of the present disclosure;
FIG. 18 is a diagram of a structure of a mounting bracket according to another embodiment of the present disclosure;
FIG. 19 is an exploded view of a support and a damping member according to another embodiment of the present disclosure;
FIG. 20 is an exploded view of a connecting rod and a lead screw mechanism according to another embodiment of the present disclosure;
FIG. 21 is a cross-sectional view of a display screen and a posture adjustment assembly when the display screen is in a storage position and a posture adjustment assembly according to still another embodiment of the present disclosure;
FIG. 22 is a cross-sectional view of the display screen and the posture adjustment assembly when the display screen is in the extension position according to still another embodiment of the present disclosure;
FIG. 23 is a cross-sectional view of the posture adjustment assembly from another viewing angle according to still another embodiment of the present disclosure;
FIG. 24 is an exploded view of the posture adjustment assembly according to still another embodiment of the present disclosure;
FIG. 25 is a diagram of a structure of the support of the posture adjustment assembly according to still another embodiment of the present disclosure;
FIG. 26 is a diagram of a structure of the mounting bracket of the posture adjustment assembly according to still another embodiment of the present disclosure;
FIG. 27 is a schematic block diagram of a seat according to an embodiment of the present disclosure; and
FIG. 28 is a schematic block diagram of a vehicle according to an embodiment of the present disclosure.

### Reference numerals:

vehicle 2000, seat 1000,
seat armrest 1, posture adjustment assembly 2, seat armrest screen 3,
armrest body 100, screen mounting surface 110, storage recess 120, component 101 to be mounted,
display screen 200, display surface 210, flip edge 211,
support 300, arc-shaped plate section 310, second engaging teeth 311, insertion block 312, damping member 320, mounting groove 321, limiting folding plate 330, flat plate section 340, limiting block 341, first lug 350, second shaft hole 351, second connecting rod shaft 352,
lead screw mechanism 360, lead screw 370, threaded section 371, connecting section 372, first nut 374, first connecting rod shaft 375, bearing 380, second nut 381, nut body 382, accommodation ring 383, notch 384, elastic member 385,
connecting rod mechanism 390, connecting rod 391, first connecting plate 392, second connecting plate 393, first shaft hole 394, third shaft hole 395, fifth shaft hole 396, connecting rod shaft 397,
cover plate 400,
slide rail bracket 500, arc-shaped guide cavity 510, first arc-shaped guide wall 511, second arc-shaped guide wall 512,
housing 600, first limiting surface 601, second limiting surface 602, upper cover 610, lower cover 620, mounting cavity 630, mounting bracket 640, first limiting rib 650, second limiting rib 660,
drive mechanism 700,
transmission mechanism 800, gear sleeve 810, first engaging teeth 811, fourth shaft hole 812, second lug 813, gear shaft 820, recess 821, transmission rib 822, guide portion 823, ring piece 830, clamping slot 831, fastener 840, elastic member 850, spacer 860, transmission block 870, clamping teeth 871, friction piece 880, axial limiting mechanism 801, clutch apparatus 890,
speed reduction and torque increase mechanism 900, first-stage worm 910, first-stage gear 920, second-stage worm 930, second-stage gear 940, transmission groove 941, circuit board 950, potentiometer 960, detection gear 961, fingerprint acquisition apparatus 970, gesture acquisition apparatus 980.

### DESCRIPTION OF EMBODIMENTS

Embodiments of the present disclosure are described in detail below. The embodiments described with reference to the accompanying drawings are examples.

In the description of the present disclosure, it will be understood that the orientations or positional relationships indicated by the terms "center", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the accompanying drawings, and are only for ease of describing the present disclosure and simplifying the description, rather than indicating or implying that an indicated apparatus or element must have a specific orientation or must be constructed and operated in a specific orientation. Therefore, this will not be understood as a limitation on the present disclosure.

In the description of the present disclosure, "a first feature" and "a second feature" may include one or more such features.

In the description of the present disclosure, "a plurality of" means two or more.

In description of the present disclosure, that the first feature is "above" or "below" the second feature may include that the first feature is in direct contact with the second feature, or may include that the first feature and the second feature are in contact with each other through another feature therebetween rather than direct contact.

In description of the present disclosure, that the first feature is "above", "on", and "over" the second feature includes that the first feature is directly above and obliquely above the second feature, or merely indicates that a horizontal height of the first feature is higher than that of the second feature.

A seat armrest 1 according to an embodiment of the present disclosure is described below with reference to the accompanying drawings.

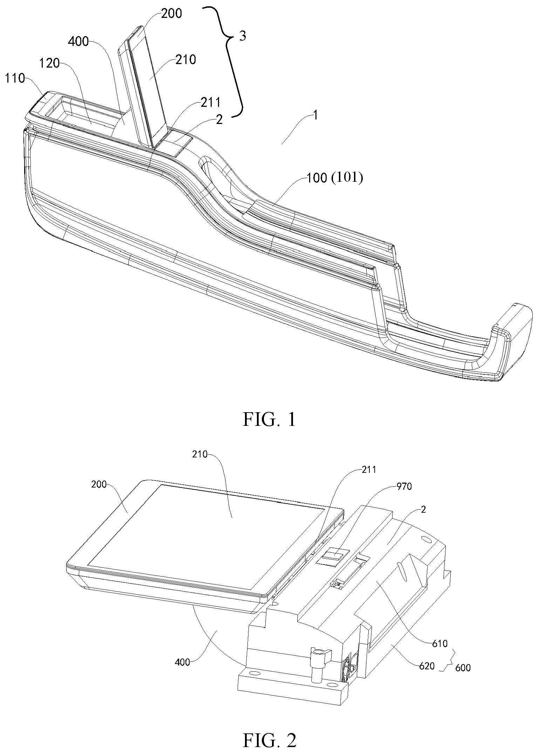

As shown in FIG. 1 to FIG. 10, the seat armrest 1 according to this embodiment of the present disclosure includes an armrest body 100, a posture adjustment assembly 2, and a display screen 200.

The armrest body 100 has a screen mounting surface 110. The screen mounting surface 110 is provided with a storage recess 120. The posture adjustment assembly 2 is arranged on the armrest body 100. The display screen 200 has a display surface 210. The display screen 200 is mounted on the posture adjustment assembly 2. The posture adjustment assembly 2 drives the display screen 200 to flip between a storage position and an extension position. When the display screen 200 is in the storage position, the display screen 200 is accommodated in the storage recess 120, and the display surface 210 is flush with the screen mounting surface 110. When the display screen 200 is in the extension position, at least part of the display screen 200 is located outside the storage recess 120, an edge of the display surface 210 adjacent to the screen mounting surface 110 constitutes a flip edge 211, and the flip edge 211 is flush with the screen mounting surface 110.

There may be a plurality of extension positions for the display screen 200. In this way, the display screen 200 can hover in different extension positions, and therefore, angles of the extension positions of the display screen 200 can be adjusted based on user requirements.

For example, the screen mounting surface 110 may be an upper surface of the armrest body 100. In this case, a flip axis of the display screen 200 may extend along a lateral direction of a vehicle, and a rear edge of the display screen 200 along a longitudinal direction of the vehicle constitutes a flip edge, allowing the display screen 200 to flip from front to rear. Alternatively, the screen mounting surface 110 may be a side surface of the armrest body 100. In this case, a flip axis of the display screen 200 may extend along a longitudinal direction of a vehicle, and an upper edge of the display screen 200 along a vertical direction of the vehicle constitutes a flip edge, allowing the display screen 200 to flip from bottom to top. Certainly, the flip axis and a flip direction of the display screen 200 may alternatively be adjusted based on different actual requirements.

In the seat armrest 1 according to this embodiment of the present disclosure, the armrest body 100 is provided with the screen mounting surface 110, and the screen mounting surface 110 is provided with the storage recess 120. The screen mounting surface 110 of the armrest body 100 may be the upper or side surface of the armrest body 100. The storage recess 120 may accommodate the display screen 200. The posture adjustment assembly 2 is arranged on the armrest body 100. The display screen 200 has the display surface 210. The display screen 200 is mounted on the posture adjustment assembly 2. The posture adjustment assembly 2 drives the display screen 200 to flip between the storage position and the extension position.

In this way, the display screen 200 may be switched between the storage position and the extension position. When a user needs to view the display screen 200, the display screen 200 is flipped to the extension position through the posture adjustment assembly 2 to facilitate viewing by the user, thereby improving the user's viewing experience. When the user does not need to view the display screen 200, the display screen 200 may be flipped to the storage position through the posture adjustment assembly 2. This may reduce occupation space of the display screen 200, thereby improving in-vehicle space. In addition, after the display screen 200 is accommodated in the storage recess 120, a possibility of accidental contact with the display screen 200 when the display screen 200 is not in use can be reduced, thereby helping protect the display screen 200 and prevent damage to the display screen 200.

It will be noted that the display screen 200 does not only necessarily hover in the extension position only; instead, the display screen 200 can hover in any position between the storage position and the extension position. When the display screen 200 is in the extension position, an angle between the screen mounting surface 110 and the display surface 210 may be not less than 60° and not greater than 90°. When the display screen 200 is in the storage position, the angle between the screen mounting surface 110 and the display surface 210 may be 0°.

In addition, when the display screen 200 is in the storage position, the display screen 200 is accommodated in the storage recess 120, and the display surface 210 is flush with the screen mounting surface 110. This can not only improve an accommodation effect of the storage recess 120 for the display screen 200, allowing the display screen 200 not to protrude from the screen mounting surface 110, further reducing the possibility of accidental contact with the display screen 200, thereby better protecting the display screen 200, but also minimize space occupied by the display screen 200 when in the storage position. Moreover, a transition between the display screen 200 and the screen mounting surface 110 is smoother, eliminating any height difference at the transition between the display screen 200 and the screen mounting surface 110, thereby preventing dust accumulation at the transition between the display screen 200 and the screen mounting surface 110, allowing an appearance of the seat armrest 1 to be cleaner and neater.

Furthermore, when the display screen 200 is in the extension position, at least part of the display screen 200 is located outside the storage recess 120, the edge of the display surface 210 adjacent to the screen mounting surface 110 constitutes the flip edge 211, and the flip edge 211 is flush with the screen mounting surface 110. In this way, when the display screen 200 flips from the storage position to the extension position, the flip edge 211 may always be flush with the screen mounting surface 110. In other words, in a process in which the display screen 200 flips from the storage position to the extension position, a position of the flip edge 211 of the display screen 200 may remain unchanged. This can prevent the display screen 200 from moving forward or downward in its entirety, allowing the display screen 200 to have better rotational stability, require smaller space to move, and provide easier viewing for the user after being rotated to the extension position, thereby improving the viewing experience. Moreover, a gap between the display screen 200 and the armrest body 100 does not change or changes slightly, thereby preventing dust from accumulating at the transition. This avoids hand pinching while allowing the appearance of the seat armrest 1 to be cleaner and neater, thereby providing a better user experience.

In this way, the seat armrest 1 according to this embodiment of the present disclosure can accommodate and lift the display screen 200, and the display screen 200 requires relatively small space to move, offering advantages such as small occupation space, easy viewing, and clear and neat appearance.

A posture adjustment assembly 2 for a display screen according to an embodiment of the present disclosure is described below with reference to the accompanying drawings. The posture adjustment assembly 2 is mounted on a component 101 to be mounted. The posture adjustment assembly 2 drives the display screen 200 to flip between a storage position and an extension position relative to the component 101 to be mounted. The posture adjustment assembly 2 includes a support 300. The support 300 is connected to the display screen 200. The support 300 includes an arc-shaped plate section 310. The support 300 drives the display screen 200 to flip around a central axis of the arc-shaped plate section 310.

The posture adjustment assembly 2 for the display screen according to this embodiment of the present disclosure can accommodate and lift the display screen 200, and the display screen 200 requires small space to move, offering advantages such as small occupation space and easy viewing.

A seat armrest screen 3 according to an embodiment of the present disclosure is described below with reference to the accompanying drawings. The seat armrest screen 3 includes the display screen 200 and the posture adjustment assembly 2 for the display screen according to the foregoing embodiment of the present disclosure. The component 101 to be mounted is the armrest body 100. The posture adjustment assembly 2 is mounted on the armrest body 100. The posture adjustment assembly 2 drives the display screen 200 to flip between the storage position and the extension position relative to the armrest body 100.

In the seat armrest screen 3 according to this embodiment of the present disclosure, through use of the posture adjustment assembly 2 for the display screen according to the foregoing embodiment of the present disclosure, the display screen 200 can be accommodated and lifted, and the display screen 200 requires relatively small space to move, offering advantages such as small occupation space and easy viewing.

In some specific embodiments of the present disclosure, as shown in FIG. 1, the flip axis of the display screen 200 coincides with the flip edge 211 of the display surface 210.

Specifically, the display screen 200 may be fastened to the posture adjustment assembly 2 and drive, through the posture adjustment assembly 2, the display screen 200 to flip. During a flipping process, the display screen 200 may flip around the flip edge 211 of the display surface 210, and the position of the flip edge 211 may remain unchanged. It will be understood that, the flip edge 211 of the display surface 210 is a side edge of an upper surface of the display screen 200. Setting in this manner can prevent a gap change or a height difference between the flip edge 211 and the screen mounting surface 110 during the flipping process of the display screen 200, thereby preventing a height of the display screen 200 from dropping, and maintaining the flip edge 211 and the screen mounting surface 110 to be flush with each other, allowing the display screen 200 to have better rotational stability.

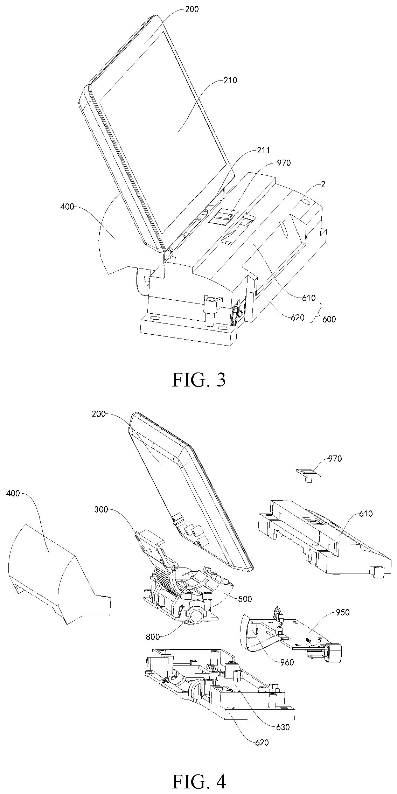

In some specific embodiments of the present disclosure, as shown in FIG. 4, FIG. 5, FIG. 8, and FIG. 9, the posture adjustment assembly 2 includes a support 300.

The support 300 is connected to the display screen 200. The support 300 includes the arc-shaped plate section 310. The support 300 drives the display screen 200 to flip around the central axis of the arc-shaped plate section 310. The central axis of the arc-shaped plate section 310 coincides with the flip edge 211 of the display surface 210.

In other words, the display screen 200 in this embodiment of the present disclosure may not rotate around a physical shaft. Specifically, the display screen 200 may be fixedly connected to the support 300, and when the support 300 rotates, the display screen 200 may be driven to rotate. In addition, a rotating axis of the support 300 is set to coincide with of the flip edge 211 of the display surface 210. In this way, when the support 300 rotates, the display screen 200 may be driven to rotate around the flip edge 211 of the display surface 210, and the position of the flip edge 211 does not change, thereby preventing a change in a gap between the flip edge 211 and the screen mounting surface 110 of the seat armrest 1. This can not only improve dustproof and waterproof performance of the seat armrest 1, but also allows for a neater junction between the display screen 200 and the screen mounting surface 110 when the display screen 200 is in the extension position, providing a more aesthetically pleasing appearance.

In addition, it will be understood that, the support 300 moves in an arc shape during rotation, and through the arrangement of the arc-shaped plate section 310, an area that the arc-shaped plate section 310 passes through during rotation can be smaller. This can not only reduce a volume of the support 300 and space required by the support 300 for the rotation, but also can prevent the support 300 from having position interference with another component, thereby making it easier for the support 300 to rotate.

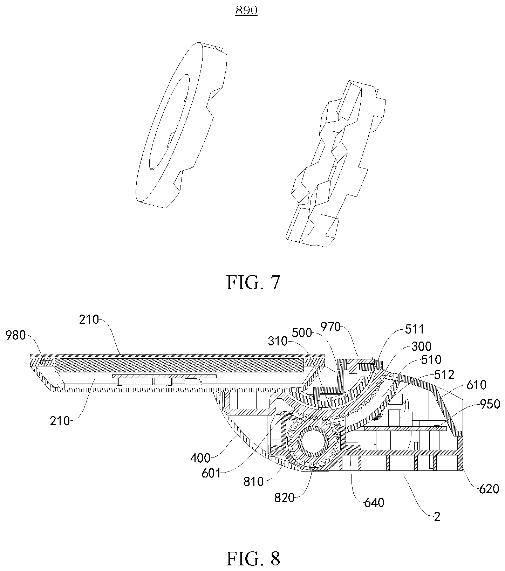

In some specific embodiments of the present disclosure, as shown in FIG. 8, when the display screen 200 is in the storage position, the arc-shaped plate section 310 is located inside the armrest body 100.

Specifically, the support 300 is connected to a side of the display screen 200 facing away from the display surface 210. When the display screen 200 is in the storage position, the display screen 200 covers the posture adjustment assembly 2, that is, the posture adjustment assembly 2 is located in the armrest body 100 in its entirety, and certainly, the support 300 is also located in the armrest body 100. This not only allows the posture adjustment assembly 2 to be covered by the armrest body 100, providing a more aesthetically pleasing appearance, but also protects the posture adjustment assembly 2, preventing the user from accidentally coming into contact with the posture adjustment assembly 2, preventing damage to the posture adjustment assembly 2, and providing a better riding experience for the user.

In some specific embodiments of the present disclosure, as shown in FIG. 1 to FIG. 4, FIG. 8, and FIG. 9, the seat armrest 1 further includes a cover plate 400.

The cover plate 400 is mounted on the display screen 200. When the display screen 200 is in the storage position, the cover plate 400 is located in the storage recess 120. When the display screen 200 is in the extension position, the cover plate 400 covers a portion of the support 300 that extends out of the storage recess 120.

The cover plate 400 may be fixedly mounted on the display screen 200, that is, the cover plate 400 may flip together with the display screen 200. In addition, the cover plate 400 is connected to the side of the display screen 200 facing away from the display surface 210. In this way, when the display screen 200 is in the storage position, the cover plate 400 may also be located in the storage recess 120. Therefore, the cover plate 400 can be covered by the display screen 200, and the cover plate 400 is not exposed from the armrest body 100, thereby ensuring a neat overall appearance of the seat armrest 1. When the display screen 200 is in the extension position, the cover plate 400 can rotate with the display screen 200 and extend out of the storage recess 120, and the cover plate 400 can cover the portion of the support 300 that is exposed from the storage recess 120, allowing the user not to directly view the support 300, thereby providing a more aesthetically pleasing appearance. In addition, this can also prevent the user from touching the support 300, and prevent hand pinching during rotation of the support 300, thereby improving safety.

In addition, the cover plate 400 may also be configured to be arc-shaped matching the arc-shaped plate section 310 of the support 300. In this way, space occupied by the cover plate 400 can be relatively small, making arrangement easy.

In some specific embodiments of the present disclosure, as shown in FIG. 4 and FIG. 6 to FIG. 9, the posture adjustment assembly 2 further includes a slide rail bracket 500.

A relative position between the slide rail bracket 500 and the armrest body 100 is fixed. The slide rail bracket 500 is configured with an arc-shaped guide cavity 510. The arc-shaped plate section 310 of the support 300 is slidably fitted in the arc-shaped guide cavity 510 to define rotation of the support 300 around the central axis of the arc-shaped plate section 310. The central axis of the arc-shaped plate section 310 coincides with the flip edge 211 of the display surface 210. Therefore, the arc-shaped guide cavity 510 of the slide rail bracket 500 may define the rotation of the support 300 around the arc-shaped plate section 310, that is, around the flip edge 211 of the display surface 210.

In other words, a position of the slide rail bracket 500 remains unchanged during the flipping process of the display screen 200, the arc-shaped guide cavity 510 of the slide rail bracket 500 can guide the rotation of the support 300, and the slide rail bracket 500 can also serve to fasten and support the support 300. This allows an overall structure of the posture adjustment assembly 2 to be more stable and the rotation of the support 300 to be smoother, and further improves stability of the rotation of the display screen 200. In addition, the flip edge 211 of the display surface 210 is prevented from being deflected, so that the display screen 200 better fits the screen mounting surface 110 during the flipping process.

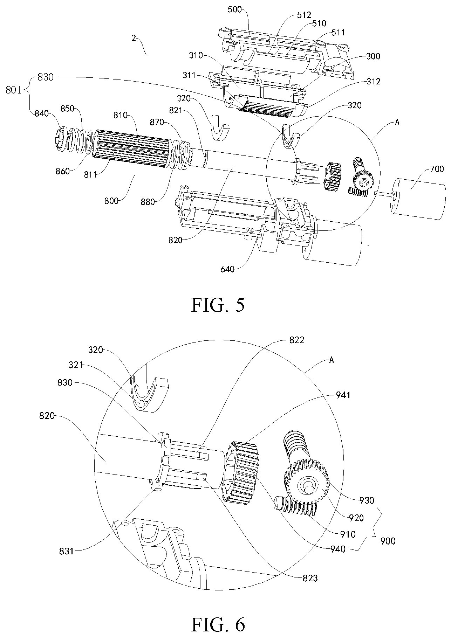

Further, as shown in FIG. 5, damping members 320 are arranged between the arc-shaped plate section 310 and an inner wall of the arc-shaped guide cavity 510. The damping members 320 each may be a damping sleeve, a spring, a damper, or the like. The damping member 320 is configured to apply a damping force to the rotation of the support 300. The arrangement of the damping member 320 can increase a damping force between the support 300 and the arc-shaped guide cavity 510, making the rotation of the support 300 more stable and preventing rapid rotation of the support 300. This allows the rotation of the display screen 200 to be smoother, making it easier for the user to adjust a rotation position of the display screen 200. Moreover, the damping member 320 can be used to absorb instantaneous impact on the display screen 200 or the support 300, thereby preventing the support 300 from breaking or being damaged. In addition, the damping member 320 can also eliminate a gap between the support 300 and the slide rail bracket 500 and tooth gaps within the posture adjustment assembly 2, thereby avoiding noise caused by any collision between the support 300 and the slide rail bracket 500 and noise of vibration.

Still further, as shown in FIG. 5, the damping members 320 are respectively arranged on two axial sides of the arc-shaped plate section 310. In this way, there is a damping force between both the axial sides of the arc-shaped plate section 310 and the arc-shaped guide cavity 510, so that the damping force between the arc-shaped plate section 310 and the inner wall of the arc-shaped guide cavity 510 is more evenly distributed. This further improves rotational stability of the support 300, allows the display screen 200 to flip more stably and reliably, and prevents the display screen 200 from shaking, thereby providing a better viewing experience for the user.

For example, as shown in FIG. 5 and FIG. 6, the damping members 320 each may be a damping sleeve. The damping members 320 each may be provided with a mounting groove 321 on a side facing the arc-shaped plate section 310. Insertion blocks 312 are arranged on the two axial sides of the arc-shaped plate section 310. The insertion blocks 312 may be inserted into the mounting grooves 321 of the damping members 320 to achieve fastening between the damping members 320 and the arc-shaped plate section 310. A thickness of the damping member 320 may be greater than a thickness of the arc-shaped plate section 310, and a thickness of the insertion block 312 may be less than a thickness of the remaining part of the arc-shaped plate section 310. The arc-shaped guide cavity 510 has a first arc-shaped guide wall 511 and a second arc-shaped guide wall 512. The first arc-shaped guide wall 511 and the second arc-shaped guide wall 512 are respectively arranged on two sides of the arc-shaped plate section 310 in a thickness direction of the arc-shaped plate section 310. Each of the damping members 320 is in contact engagement with the first arc-shaped guide wall 511 and the second arc-shaped guide wall 512.

This facilitates assembly of the arc-shaped plate section 310 and the damping members 320. Moreover, after the damping members 320 come into contact with the inner wall of the arc-shaped guide cavity 510, the arc-shaped plate section 310 is not in direct contact with the inner wall of the arc-shaped guide cavity 510. Therefore, wear between the arc-shaped plate section 310 and the arc-shaped guide cavity 510 can be avoided, and friction between the support 300 and the slide rail bracket 500 can be reduced, making it easier for the support 300 to rotate.

In addition, the arc-shaped guide cavity 510 can guide the two damping members 320 simultaneously, reducing an assembly error between the two damping members 320. This helps reduce transmission error between gears in the posture adjustment assembly 2, for example, a transmission error between first engaging teeth 811 and second engaging teeth 311 described below.

In some specific embodiments of the present disclosure, as shown in FIG. 4, FIG. 5, and FIG. 8 to FIG. 11, the posture adjustment assembly 2 further includes a housing 600, a drive mechanism 700, and a transmission mechanism 800.

The housing 600 is mounted on the armrest body 100. The drive mechanism 700 is mounted on the housing 600. The transmission mechanism 800 is in transmission connection with the drive mechanism 700 and the support 300. The drive mechanism 700 drives, through the transmission mechanism 800, the support 300 to rotate around the central axis of the arc-shaped plate section 310 to drive the display screen 200 to flip between the storage position and the extension position.

The drive mechanism 700 may be a motor. The posture adjustment assembly 2 can automatically drive, through the drive mechanism 700, the support 300 to rotate, thereby achieving automatic flipping of the display screen 200. Compared with manual flipping of the display screen 200, this operation is easier and faster, providing a better user experience.

Moreover, all components of the posture adjustment assembly 2, such as the drive mechanism 700, the transmission mechanism 800, and the support 300, may be mounted in the housing 600. The support 300 may be located in the housing 600 when the display screen 200 is in the storage position, and may extend out of the housing 600 when the display screen 200 is in the extension position.

For example, the posture adjustment assembly 2 may have a power-off reset function. When the vehicle is powered off, the transmission mechanism 800 drives the display screen 200 to automatically return to a horizontal state of the storage position.

In some specific embodiments of the present disclosure, as shown in FIG. 5, FIG. 6, and FIG. 8 to FIG. 10, the transmission mechanism 800 includes a gear sleeve 810.

The gear sleeve 810 is in transmission connection with the drive mechanism 700. An outer circumferential surface of the gear sleeve 810 is provided with first engaging teeth 811. An outer circumferential surface of the arc-shaped plate section 310 is provided with second engaging teeth 311. The first engaging teeth 811 are engaged with the second engaging teeth 311.

In this way, the posture adjustment assembly 2 may transfer power to the gear sleeve 810 through the drive mechanism 700 to drive the gear sleeve 810 to rotate, and then transfer power to the arc-shaped plate section 310 through the engagement of the first engaging teeth 811 and the second engaging teeth 311. In this way, the support 300 can be driven to rotate to achieve flipping, extension, and accommodation of the display screen 200.

In addition, transferring power through the engagement of the first engaging teeth 811 on the outer circumferential surface of the gear sleeve 810 and the second engaging teeth 311 on the outer circumferential surface of the arc-shaped plate section 310 not only allows reliable power transmission, but also enables the support 300 to stop rotating at any angle. In this way, the display screen 200 may have a maximum extension position, and the display screen 200 can hover at any position between the extension position and the storage position. Specifically, when the display screen 200 flips to an angle, the user may control the drive mechanism 700 to stop operating. In this case, the drive mechanism 700 remains stationary, and a position of the gear sleeve 810 also remains stationary. The gear sleeve 810 can fix a position of the arc-shaped plate section 310 through the engagement of the first engaging teeth 811 and the second engaging teeth 311, and a position of the support 300 remains unchanged, thereby achieving fastening of the display screen 200. The user can adjust the display screen 200 to hover at a plurality of angles as needed, resulting in a better user experience.

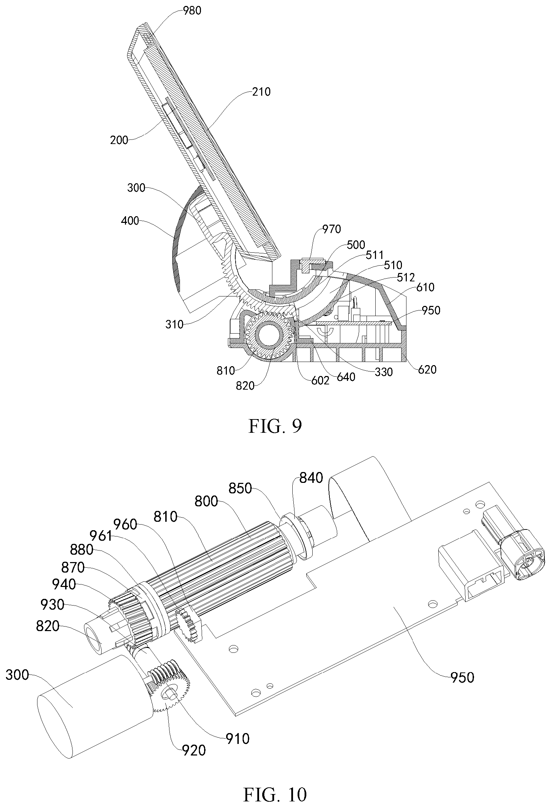

In some specific embodiments of the present disclosure, as shown in FIG. 5 and FIG. 10, the transmission mechanism 800 further includes a gear shaft 820.

The gear sleeve 810 is in transmission connection with the drive mechanism 700 through the gear shaft 820. The gear sleeve 810 is sleeved over the gear shaft 820 and rotates synchronously with the gear shaft 820. In this way, the drive mechanism 700 may transfer power to the gear sleeve 810 through the gear shaft 820, and then transfer the power to the support 300 through the gear sleeve 810, thereby driving the display screen 200 to flip.

In some specific embodiments of the present disclosure, the transmission mechanism 800 further includes an axial limiting mechanism 801.

The axial limiting mechanism 801 is arranged on the gear shaft 820 and fits the gear sleeve 810. The axial limiting mechanism 801 fixes a position of the gear sleeve 810 in an axial direction of the gear shaft 820. This allows the axial limiting mechanism 801 to axially limit the gear sleeve 810 in the axial direction of the gear shaft 820, to fix a relative position between the gear sleeve 810 and the gear shaft 820 in the axial direction of the gear shaft 820, preventing any positional wobbling of the gear sleeve 810, thereby helping make power transmission between the gear sleeve 810 and the support 300 more stable.

Specifically, the axial limiting mechanism 801 may include a ring piece 830 and a fastener 840. The ring piece 830 is arranged on an outer circumferential surface of the gear shaft 820. The fastener 840 is mounted on the gear shaft 820. The gear sleeve 810 is defined between the ring piece 830 and the fastener 840 in the axial direction of the gear shaft 820.

In other words, the ring piece 830 and the fastener 840 are respectively located at two axial ends of the gear sleeve 810. In this way, the gear sleeve 810 can be axially limited by using the ring piece 830 and the fastener 840, to fix the relative position between the gear sleeve 810 and the gear shaft 820 in the axial direction of the gear shaft 820, preventing any positional wobbling of the gear sleeve 810, thereby helping make power transmission between the gear sleeve 810 and the support 300 more stable.

Further, as shown in FIG. 5, the transmission mechanism 800 further includes an elastic member 850. The elastic member 850 is sleeved over the gear shaft 820 and abuts between the gear sleeve 810 and the fastener 840.

For example, the elastic member 850 may be a spring. The spring is sleeved over the gear shaft 820 and located between the gear sleeve 810 and the fastener 840. Moreover, after the transmission mechanism 800 is assembled into place, the elastic member 850 may be in a compressed state, allowing the fastener 840 to press the gear sleeve 810 through the elastic member 850. This allows the gear sleeve 810 to be pressed between the fastener 840 and the ring piece 830, thereby further improving stability of position fixing of the gear sleeve 810, making the gear sleeve 810 less prone to axial wobbling along the axial direction of the gear shaft 820. Therefore, fitting between the gear sleeve 810 and the support 300 is more stable, and the transmission mechanism 800 can stably transfer power to the support 300, thereby driving the display screen 200 to flip stably.

In some specific embodiments of the present disclosure, as shown in FIG. 5, the transmission mechanism 800 further includes a spacer 860. The spacer 860 is sleeved over the gear shaft 820 and located between the elastic member 850 and the gear sleeve 810. In this way, the elastic member 850 can abut against the gear sleeve 810 through the spacer 860. The arrangement of the spacer 860 allows easier abutment against the elastic member 850, making the abutment between the elastic member 850 and the spacer 860 more stable. In addition, a contact area between the spacer 860 and the gear sleeve 810 is larger, enabling the elastic member 850 to reliably press the gear sleeve 810 against the ring piece 830, thereby further improving an axial fastening effect for the gear sleeve 810.

In some specific embodiments of the present disclosure, as shown in FIG. 5, the transmission mechanism 800 further includes a transmission block 870 and a friction piece 880.

The transmission block 870 is sleeved over the gear shaft 820. The transmission block 870 is located between the gear sleeve 810 and the ring piece 830 and rotates synchronously with the gear shaft 820. The friction piece 880 is arranged between the transmission block 870 and the gear sleeve 810. The transmission block 870 transfers rotation of the gear shaft 820 to the gear sleeve 810 through the friction piece 880.

It should be noted that friction between the friction piece 880 and the transmission block 870 and friction between the friction piece 880 and the gear sleeve 810 are both greater than a driving force required by the display screen 200 to flip. In this way, when the drive mechanism 700 proactively drives the display screen 200 to flip, the transmission block 870 can transfer power to the gear sleeve 810 through the friction piece 880, thereby driving the gear sleeve 810 to rotate to achieve the flipping of the display screen 200.

When the display screen 200 tends to flip under action of an external force, for example, when the user manually moves the display screen 200 or accidentally comes into contact with the display screen 200, if the external force is greater than the friction between the friction piece 880 and the transmission block 870, or if the external force is greater than the friction between the friction piece 880 and the gear sleeve 810, relative rotation occurs between the gear sleeve 810 and the friction piece 880 or between the friction piece 880 and the transmission block 870, causing the display screen 200 to be pushed by the external force to flip. Setting in this manner can prevent the display screen 200 from breaking or having a crack due to an excessively large external force after the transmission mechanism 800 locks the display screen 200.

In some specific embodiments of the present disclosure, as shown in FIG. 6, one of the ring piece 830 and the transmission block 870 is provided with clamping slots 831 and the other is provided with clamping teeth 871. The clamping teeth 871 are inserted into the clamping slots 831 to cause the transmission block 870 to rotate synchronously with the gear shaft 820.

For example, the ring piece 830 may be provided with the clamping slots 831 and the transmission block 870 may be provided with the clamping teeth 871. In this way, when the ring piece 830 rotates synchronously with the gear shaft 820, power can be transferred to the transmission block 870 through engagement between the clamping slots 831 and the clamping teeth 871, thereby allowing the transmission block 870 to rotate synchronously with the gear shaft 820. Moreover, through transmission engagement between the clamping slots 831 and the clamping teeth 871, power transmission between the ring piece 830 and the transmission block 870 is more stable and reliable.

Further, as shown in FIG. 5 and FIG. 6, the plurality of clamping slots 831 are spaced apart along a circumferential direction of the ring piece 830. The plurality of clamping teeth 871 are spaced apart along a circumferential direction of the transmission block 870. The plurality of clamping teeth 871 are inserted into the plurality of clamping slots 831 in a one-to-one correspondence. In this way, when the ring piece 830 transfers power to the transmission block 870, circumferential forces acting on the ring piece 830 and the transmission block 870 are more evenly distributed, allowing the power transmission between the ring piece 830 and the transmission block 870 to be more stable and reliable, thereby more effectively preventing power transmission failure between the ring piece 830 and the transmission block 870. For example, when one of the plurality of clamping teeth 871 and one of the plurality of clamping slots 831 are damaged and fail, the engagement between the remaining plurality of clamping teeth 871 and the remaining plurality of clamping slots 831 can still ensure the power transmission between the ring piece 830 and the transmission block 870.

In some other specific embodiments of the present disclosure, as shown in FIG. 7, and with reference to FIG. 5, the transmission mechanism 800 further includes the transmission block 870 and a clutch apparatus 890. It should be noted that, in this embodiment, the transmission mechanism 800 does not include the friction piece 880. In other words, the foregoing embodiment in which the transmission mechanism 800 includes the transmission block 870 and the friction piece 880 and the embodiment in which the transmission mechanism 800 includes the transmission block 870 and the clutch apparatus 890 are parallel embodiments.

The transmission block 870 is sleeved over the gear shaft 820. The transmission block 870 is located between the gear sleeve 810 and the ring piece 830 and rotates synchronously with the gear shaft 820. The clutch apparatus 890 is arranged between the transmission block 870 and the gear sleeve 810. The clutch apparatus 890 controls whether power is to be transferred between the transmission block 870 and the gear sleeve 810.

Specifically, when the clutch apparatus 890 is engaged, the clutch apparatus 890 can perform power transmission, that is, the transmission block 870 can transfer power to the gear sleeve 810 through the clutch apparatus 890 to drive the gear sleeve 810 to rotate, thereby enabling the drive mechanism 700 to drive the display screen 200 to flip. When the clutch apparatus 890 is disengaged, power transmission of the clutch apparatus 890 is stopped, that is, no power transmission is performed between the transmission block 870 and the gear sleeve 810. When the display screen 200 is manually flipped, a rotational force of the display screen 200 is not transferred to the transmission block 870 through the clutch apparatus 890, thereby protecting the drive mechanism 700.

In some specific embodiments of the present disclosure, as shown in FIG. 5, the outer circumferential surface of the gear shaft 820 is provided with a recess 821. The fastener 840 is a circlip. The circlip is engaged in the recess 821. In this way, the recess 821 can predetermine a position of the circlip, and after the circlip is engaged in the recess 821, the gear sleeve 810 can be axially limited.

In some specific embodiments of the present disclosure, the drive mechanism 700 is a motor. The posture adjustment assembly 2 further includes a speed reduction and torque increase mechanism 900. The gear shaft 820 is in transmission connection with the drive mechanism 700 through the speed reduction and torque increase mechanism 900. The speed reduction and torque increase mechanism 900 includes a first-stage worm 910, a first-stage gear 920, a second-stage worm 930, and a second-stage gear 940.

The first-stage worm 910 is sleeved over a motor shaft of the motor and is driven by the motor shaft to rotate. The first-stage gear 920 is mounted on the housing 600 and engaged with the first-stage worm 910. The second-stage worm 930 is mounted on the housing 600 and rotates synchronously with the first-stage gear 920. The second-stage gear 940 is sleeved over the gear shaft 820 and rotates synchronously with the gear shaft 820. The second-stage gear 940 is engaged with the second-stage worm 930.

In this way, when needing to rotate the display screen 200, the user can start the drive mechanism 700, and the drive mechanism 700 can drive the first-stage worm 910 to rotate. In addition, power can be transferred to the transmission mechanism 800 sequentially through the first-stage worm 910, the first-stage gear 920, the second-stage worm 930, and the second-stage gear 940, and then, the transmission mechanism 800 drives the display screen 200 to flip. Moreover, through gear-tooth fitting of the speed reduction and torque increase mechanism 900, a rotational speed transferred from the drive mechanism 700 to the transmission mechanism 800 can be effectively reduced, thereby increasing torque transferred from the drive mechanism 700 to the transmission mechanism 800, allowing the display screen 200 to flip more stably.

Further, as shown in FIG. 5, a central axis of the first-stage worm 910 coincides with a central axis of the motor shaft. A central axis of the first-stage gear 920 coincides with a central axis of the second-stage worm 930 and is perpendicular to the central axis of the first-stage worm 910. A central axis of the second-stage gear 940 coincides with a central axis of the gear shaft 820 and is perpendicular to the second-stage worm 930. In this way, the drive mechanism 700, the first-stage worm 910, the first-stage gear 920, the second-stage worm 930, and the second-stage gear 940 have a more compact structural layout, enabling the drive mechanism 700, the first-stage worm 910, the first-stage gear 920, the second-stage worm 930, and the second-stage gear 940 to occupy smaller space, thereby making the arrangement easy.

In some specific embodiments of the present disclosure, as shown in FIG. 5 and FIG. 6, one of the outer circumferential surface of the gear shaft 820 and an inner circumferential surface of the second-stage gear 940 is provided with transmission ribs 822 and the other is provided with transmission grooves 941. The transmission ribs 822 are inserted into the transmission grooves 941 to cause the second-stage gear 940 to rotate synchronously with the gear shaft 820.

For example, the outer circumferential surface of the gear shaft 820 may be provided with the transmission ribs 822 and the inner circumferential surface of the second-stage gear 940 may be provided with the transmission grooves 941. In this way, when the drive mechanism 700 operates, the second-stage gear 940 can transfer power to the gear shaft 820 through engagement between the transmission grooves 941 and the transmission ribs 822, thereby allowing the gear shaft 820 to rotate synchronously with the second-stage gear 940. Moreover, through transmission engagement between the transmission grooves 941 and the transmission ribs 822, power transmission between the second-stage gear 940 and the gear shaft 820 is more stable and reliable.

Further, as shown in FIG. 5 and FIG. 6, the plurality of transmission ribs 822 are spaced apart along a circumferential direction of the gear shaft 820. The plurality of transmission grooves 941 are spaced apart along a circumferential direction of the second-stage gear 940. The plurality of transmission ribs 822 are inserted into the plurality of transmission grooves 941 in a one-to-one correspondence.

In this way, when the second-stage gear 940 transfers power to the gear shaft 820, circumferential forces acting on the second-stage gear 940 and the gear shaft 820 are more evenly distributed, allowing the power transmission between the second-stage gear 940 and the gear shaft 820 to be more stable and reliable, thereby more effectively preventing power transmission failure between the second-stage gear 940 and the gear shaft 820. For example, when one of the plurality of transmission ribs 822 and one of the plurality of transmission grooves 941 are damaged and fail, the engagement between the remaining plurality of transmission ribs 822 and the remaining plurality of transmission grooves 941 can still ensure the power transmission between the second-stage gear 940 and the gear shaft 820.

In some specific embodiments of the present disclosure, as shown in FIG. 6, the transmission ribs 822 are each arranged on the outer circumferential surface of the gear shaft 820. The transmission ribs 822 each have a guide portion 823 at an end facing away from the gear sleeve 810. The guide portion 823 has a height gradually decreasing in a direction away from the gear sleeve 810. In this way, during assembly of the gear shaft 820 and the second-stage gear 940, the guide portion 823 can provide assembly guidance for the engagement between the transmission ribs 822 and the transmission grooves 941. This helps simplify steps of assembling the gear shaft 820 and the second-stage gear 940, making the assembly easier.

In some specific embodiments of the present disclosure, as shown in FIG. 5, FIG. 8, and FIG. 9, the housing 600 is configured with a first limiting surface 601 and a second limiting surface 602. The support 300 abuts against the first limiting surface 601 when the display screen 200 flips from the extension position to the storage position. The support 300 abuts against the second limiting surface 602 when the display screen 200 flips from the storage position to the extension position.

In this way, a flip range of the display screen 200 can be determined to be from the storage position to the extension position, thereby preventing the display screen 200 from being damaged by excessive flipping.

Further, as shown in FIG. 5, FIG. 8, and FIG. 9, the support 300 further includes a limiting folding plate 330. The limiting folding plate 330 is connected to a side of the arc-shaped plate section 310 away from the display screen 200 in an arc length direction. The limiting folding plate 330 abuts against the second limiting surface 602 when the display screen 200 flips from the storage position to the extension position, resulting in more reliable positioning.

In some specific embodiments of the present disclosure, as shown in FIG. 10, the posture adjustment assembly 2 further includes a circuit board 950 and a potentiometer 960.

The circuit board 950 is mounted on the housing 600 and connected to the drive mechanism 700. The potentiometer 960 is mounted on the circuit board 950. The potentiometer 960 has a detection gear 961. The detection gear 961 is engaged with the first engaging teeth 811 to detect rotation angle information of the gear sleeve 810 and save the rotation angle information to the circuit board 950.

In this way, a rotation angle of the support 300 can be detected by the detection gear 961. After the user adjusts the rotation angle of the display screen 200 and saves the angle of the display screen 200, a flip angle of the display screen 200 is corresponding to a rotation angle of the support 300. In this case, the rotation angle of the support 300 can be saved to the potentiometer 960. When the vehicle is started again or the display screen 200 is flipped from the storage position to the extension position again, the support 300 can be flipped to a position corresponding to the rotation angle saved in the potentiometer 960, thereby enabling the display screen 200 to automatically flip to a position corresponding to the flip angle saved by the user. It is more convenient for the user to use, without needing to adjust the flip angle of the display screen 200 each time.

In some specific embodiments of the present disclosure, as shown in FIG. 4, FIG. 8, and FIG. 9, the housing 600 includes an upper cover 610, a lower cover 620, a mounting bracket 640, and a slide rail bracket 500.

The upper cover 610 and the lower cover 620 are connected to each other and jointly define a mounting cavity 630. The mounting bracket 640 and the circuit board 950 are mounted on the lower cover 620 and located in the mounting cavity 630. The drive mechanism 700 and the transmission mechanism 800 are mounted on the mounting bracket 640. The slide rail bracket 500 is mounted on the mounting bracket 640. The slide rail bracket 500 and the lower cover 620 are respectively arranged on two opposite sides of the mounting bracket 640. The arc-shaped plate section 310 fits the slide rail bracket 500 to define rotation of the support 300 around the central axis of the arc-shaped plate section 310.

In this way, the upper cover 610 and the lower cover 620 can cover the drive mechanism 700, the transmission mechanism 800, the mounting bracket 640, the slide rail bracket 500, and other components and parts, allowing the posture adjustment assembly 2 to have a more aesthetically pleasing appearance. In addition, this can prevent the user from directly touching the drive mechanism 700 or the transmission mechanism 800, thereby improving safety. Moreover, the posture adjustment assembly 2 can further fasten the drive mechanism 700, the transmission mechanism 800, the slide rail bracket 500, and other components and parts by using the mounting bracket 640, allowing the components of the posture adjustment assembly 2 to be more stably connected and fastened. This manner of fastening a plurality of parts by one mounting bracket 640 reduces an assembly error and better controls a gear center distance, thereby appropriately reducing gear transmission noise.

In some specific embodiments of the present disclosure, as shown in FIG. 8 and FIG. 9, the seat armrest 1 further includes a gesture acquisition apparatus 980.

The gesture acquisition apparatus 980 is connected to the posture adjustment assembly 2. The posture adjustment assembly 2 drives, based on gesture information acquired by the gesture acquisition apparatus 980, the display screen 200 to flip between the storage position and the extension position.

For example, the gesture acquisition apparatus 980 may be an infrared sensing module. In this way, the gesture acquisition apparatus 980 can acquire gesture information of a user, and the user can control accommodation and extension of the posture adjustment assembly 2 by using different gesture information, thereby controlling the display screen 200 to be accommodated, extended, or flipped to different angles. For example, when the user raises a hand, the display screen 200 can rotate upward following the gesture, and when the hand moves downward, the display screen 200 can rotate downward following the gesture. This further simplifies user operations, and the user does not need to switch the position of the display screen 200 by touching the display screen 200 or pressing a button, resulting in easier and faster operations, thereby helping improve operating experience of the user.

In some specific embodiments of the present disclosure, as shown in FIG. 2, FIG. 3, FIG. 8, and FIG. 9, the seat armrest 1 further includes a fingerprint acquisition apparatus 970. The fingerprint acquisition apparatus 970 may be a touchscreen.

For example, the fingerprint acquisition apparatus 970 can be exposed from the armrest body 100 to facilitate acquisition of user fingerprint information. The fingerprint acquisition apparatus 970 is connected to the posture adjustment assembly 2. The posture adjustment assembly 2 drives, based on fingerprint information acquired by the fingerprint acquisition apparatus 970, the display screen 200 to flip between the storage position and the extension position.

Specifically, when a different user saves information about the flip angle of the display screen 200, the user can record a fingerprint through the fingerprint acquisition apparatus 970. When the user uses the display screen 200 next time, the user presses a finger onto the fingerprint acquisition apparatus 970, and the fingerprint acquisition apparatus 970 can control, based on information about the fingerprint, the posture adjustment assembly 2 to drive the display screen 200 to flip to a position corresponding to the information about the fingerprint. In other words, the display screen 200 can have a plurality of memory positions. The plurality of memory positions respectively correspond to different fingerprint information. When a different user uses the display screen 200, the display screen 200 can flip to a flip angle corresponding to fingerprint information of the user, thereby further improving usage experience of the user.

Certainly, the same user can record a plurality of fingerprints. The plurality of fingerprints can respectively correspond to different flip angles of the display screen 200. When the user presses the fingerprint acquisition apparatus 970 with different fingers, the fingerprint acquisition apparatus 970 can control, based on acquired fingerprint information, the posture adjustment assembly 2 to rotate to drive the display screen 200 to flip to positions corresponding to the fingerprints of the fingers. In this way, the same user can also save a plurality of flip angles of the display screen 200. Therefore, usage requirements of different users are more effectively satisfied.

The following is a brief description of steps for the posture adjustment assembly 2 to drive the display screen 200 to flip:
first, the user starts the drive mechanism 700. The drive mechanism 700 drives the first-stage worm 910 to rotate. The first-stage worm 910 transfers power to the first-stage gear 920, the second-stage worm 930, and the second-stage gear 940 sequentially. The second-stage gear 940 rotates;
then, the second-stage gear 940 transfers the power to the gear shaft 820 and drives the gear shaft 820 to rotate synchronously. The ring piece 830 rotates synchronously with the gear shaft 820;
finally, the ring piece 830 drives, through the friction piece 880, the gear sleeve 810 to rotate. The gear sleeve 810 can then drive, through the engagement between the first engaging teeth 811 and the second engaging teeth 311 of the support 300, the support 300 to rotate. The display screen 200 follows the support 300 to rotate, thereby enabling flipping of the display screen 200.

The following is a brief description of steps for assembling the posture adjustment assembly 2 in this embodiment:
first, after being connected, the drive mechanism 700 and the mounting bracket 640 are fastened with two screws;
then, the second-stage gear 940 is sleeved over the gear shaft 820, and then the transmission block 870, the friction piece 880, the gear sleeve 810, the spacer 860, and the elastic member 850 are sequentially sleeved onto the gear shaft 820. Subsequently, the fastener 840 is engaged into the recess 821 of the gear shaft 820 to form a transmission assembly, and the assembled transmission assembly is fastened to the mounting bracket 640;
next, the lower cover 620, the circuit board 950, the first-stage gear 920, and the second-stage gear 940 are separately fastened to the mounting bracket 640;
then, the two damping sleeves are respectively sleeved over two axially opposite sides of the support 300 and mounted into the slide rail bracket 500, and then fastened to the mounting bracket 640 with screws;
finally, the upper cover 610 and the lower cover 620 are fastened, and then the support 300 and the cover plate 400 are sequentially connected to the display screen 200.

A seat armrest 1 according to another embodiment of the present disclosure is described below with reference to the accompanying drawings.

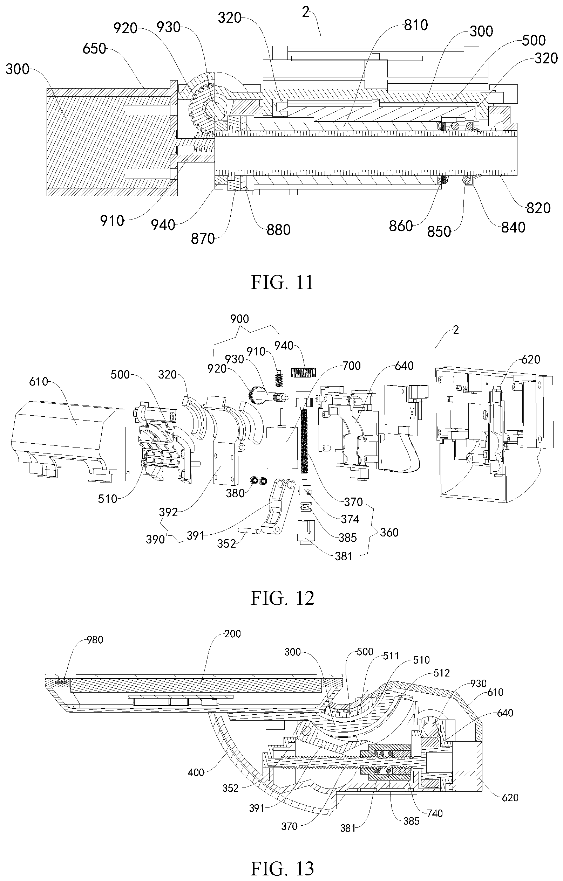

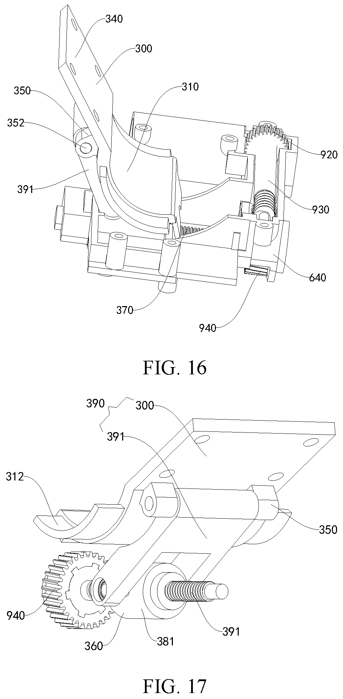

As shown in FIG. 12 to FIG. 20, the seat armrest 1 according to this embodiment of the present disclosure includes an armrest body 100, a posture adjustment assembly 2, and a display screen 200.

The armrest body 100 has a screen mounting surface 110. The screen mounting surface 110 is provided with a storage recess 120. The posture adjustment assembly 2 is arranged on the armrest body 100. The posture adjustment assembly 2 includes a lead screw mechanism 360 and a connecting rod mechanism 390. The connecting rod mechanism 390 and the lead screw mechanism 360 are rotatably connected. The display screen 200 has a display surface 210. The display screen 200 is mounted on the connecting rod mechanism 390. The lead screw mechanism 360 drives along its axial direction the connecting rod mechanism 390 to move to drive the display screen 200 to flip between a storage position and an extension position. When the display screen 200 is in the storage position, the display screen 200 is accommodated in the storage recess 120, and the display surface 210 is flush with the screen mounting surface 110. When the display screen 200 is in the extension position, at least part of the display screen 200 is located outside the storage recess 120, an edge of the display surface 210 adjacent to the screen mounting surface 110 constitutes a flip edge 211, and the flip edge 211 is flush with the screen mounting surface 110.

There may be a plurality of extension positions for the display screen 200. In this way, the display screen 200 can hover in different extension positions, and therefore, angles of the extension positions of the display screen 200 can be adjusted based on different user requirements.

For example, the screen mounting surface 110 may be an upper surface of the armrest body 100. In this case, a flip axis of the display screen 200 may extend along a lateral direction of a vehicle, and a rear edge of the display screen 200 along a longitudinal direction of the vehicle constitutes a flip edge 211, allowing the display screen 200 to flip from front to rear. Alternatively, the screen mounting surface 110 may be a side surface of the armrest body 100. In this case, a flip axis of the display screen 200 may extend along a vertical direction of a vehicle, and an upper edge of the display screen 200 along the vertical direction of the vehicle constitutes a flip edge 211, allowing the display screen 200 to flip from bottom to top. Certainly, the flip axis and a flip direction of the display screen 200 may alternatively be adjusted based on different actual requirements.

In the seat armrest 1 according to this embodiment of the present disclosure of the present invention, the armrest body 100 is provided with the screen mounting surface 110, and the screen mounting surface 110 is provided with the storage recess 120. The screen mounting surface 110 of the armrest body 100 may be the upper or side surface of the armrest body 100. The storage recess 120 may accommodate the display screen 200. The posture adjustment assembly 2 is arranged on the armrest body 100. The posture adjustment assembly 2 includes the lead screw mechanism 360 and the connecting rod mechanism 390. The connecting rod mechanism 390 and the lead screw mechanism 360 are rotatably connected. The display screen 200 has the display surface 210. The display screen 200 is mounted on the connecting rod mechanism 390. The lead screw mechanism 360 drives along its axial direction the connecting rod mechanism 390 to move to drive the display screen 200 to flip between the storage position and the extension position.

In this way, the display screen 200 can be switched between the storage position and the extension position. When a user needs to view the display screen 200, the display screen 200 is flipped to the extension position through the posture adjustment assembly 2 to facilitate viewing by the user, thereby improving the user's viewing experience. When the user does not need to view the display screen 200, the display screen 200 can be flipped to the storage position through the posture adjustment assembly 2. This can reduce space occupation of the display screen 200, thereby improving in-vehicle space. In addition, after the display screen 200 is accommodated in the storage recess 120, a possibility of accidental contact with the display screen 200 when the display screen 200 is not in use can be reduced, thereby helping protect the display screen 200 and prevent damage to the display screen 200.

In addition, the display screen 200 is driven to flip through the engagement between the lead screw mechanism 360 and the connecting rod mechanism 390, allowing transmission to be more stable. Moreover, the lead screw mechanism 360 and the connecting rod mechanism 390 may occupy a relatively small space, making it easier to mount the posture adjustment assembly 2 in the seat armrest 1 without increasing an overall volume of the seat armrest 1 or with only a relatively small proportion of the volume increased, making arrangement easy.

It should be noted that the display screen 200 does not necessarily hover in the extension position only; instead, the display screen 200 can hover in any position between the storage position and the extension position. When the display screen 200 is in the extension position, an angle between the screen mounting surface 110 and the display surface 210 may be not less than 60° and not greater than 90°. When the display screen 200 is in the storage position, the angle between the screen mounting surface 110 and the display surface 210 may be 0°.

In addition, when the display screen 200 is in the storage position, the display screen 200 is accommodated in the storage recess 120, and the display surface 210 is flush with the screen mounting surface 110. This can not only improve an accommodation effect of the storage recess 120 for the display screen 200, allowing the display screen 200 not to protrude from the screen mounting surface 110, further reducing the possibility of accidental contact with the display screen 200, thereby better protecting the display screen 200, but also minimize space occupied by the display screen 200 when in the storage position. Moreover, a transition between the display screen 200 and the screen mounting surface 110 is smoother, eliminating any height difference at the transition between the display screen 200 and the screen mounting surface 110, thereby preventing dust accumulation at the transition between the display screen 200 and the screen mounting surface 110, allowing an appearance of the seat armrest 1 to be cleaner and neater.

Furthermore, when the display screen 200 is in the extension position, at least part of the display screen 200 is located outside the storage recess 120, the edge of the display surface 210 adjacent to the screen mounting surface 110 constitutes the flip edge 211, and the flip edge 211 is flush with the screen mounting surface 110. In this way, when the display screen 200 flips from the storage position to the extension position, the flip edge 211 can always be flush with the screen mounting surface 110. In other words, in a process in which the display screen 200 flips from the storage position to the extension position, a position of the flip edge 211 of the display screen 200 can remain unchanged. This can prevent the display screen 200 from moving forward or downward in its entirety, allowing the display screen 200 to have better rotational stability, require smaller space to move, and provide easier viewing for the user after being rotated to the extension position, thereby improving the viewing experience. Moreover, a gap between the display screen 200 and the armrest body 100 does not change or changes slightly, thereby preventing dust from accumulating at the transition. This avoids hand pinching while allowing the appearance of the seat armrest 1 to be cleaner and neater, thereby providing a better user experience.

In this way, the seat armrest 1 according to this embodiment of the present disclosure can accommodate and lift the display screen 200, and the display screen 200 requires relatively small space to move, offering advantages such as small occupation space, easy viewing, and clear and neat appearance.

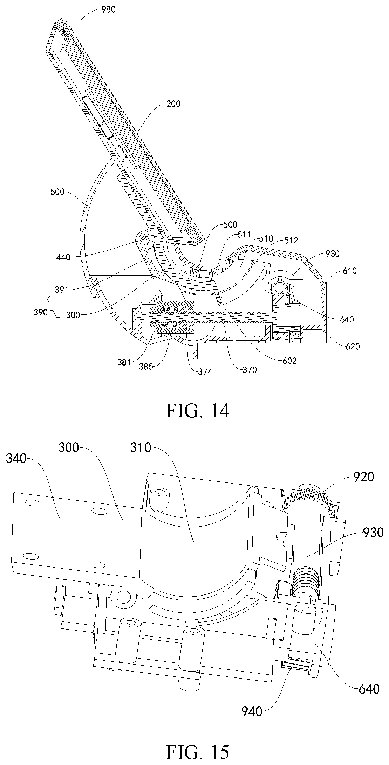

In some specific embodiments of the present disclosure, as shown in FIG. 13 and FIG. 14, the axial direction of the lead screw mechanism 360 is set perpendicular to the flip axis of the display screen 200.

Specifically, the connecting rod mechanism 390 is in transmission connection with the lead screw mechanism 360, and the connecting rod mechanism 390 may move along the axial direction of the lead screw mechanism 360. When the connecting rod mechanism 390 moves toward one axial end of the lead screw mechanism 360, the connecting rod mechanism 390 may push an end of the display screen 200 to move upward, thereby causing the display screen 200 to flip from the storage position to the extension position. When the connecting rod mechanism 390 moves toward the other axial end of the lead screw mechanism 360, the connecting rod mechanism 390 may drive an end of the display screen 200 to move downward, thereby causing the display screen 200 to flip from the extension position to the storage position. In addition, setting in this manner can reduce space required by the lead screw mechanism 360 and the connecting rod mechanism 390 to move, thereby reducing space required by the posture adjustment assembly 2 to move, making it easier to assemble the posture adjustment assembly 2 into the armrest body 100, thus further reducing a volume of the armrest body 100.

In some specific embodiments of the present disclosure, as shown in FIG. 2 and FIG. 3, the flip axis of the display screen 200 coincides with the flip edge 211 of the display surface 210.

In this way, the display screen 200 may be fastened to the posture adjustment assembly 2 and drive, through the lead screw mechanism 360 and the connecting rod mechanism 390, the display screen 200 to flip. In addition, during a flipping process, the display screen 200 may flip around the flip edge 211 of the display surface 210, and the position of the flip edge 211 may remain unchanged. It will be understood that, the flip edge 211 of the display surface 210 is a side edge of an upper surface of the display screen 200. Setting in this manner can prevent a gap change or a height difference between the flip edge 211 and the screen mounting surface 110 during the flipping process of the display screen 200, thereby preventing a height of the display screen 200 from dropping, and maintaining the flip edge 211 and the screen mounting surface 110 to be always flush with each other, allowing the display screen 200 to have better rotational stability.

In some specific embodiments of the present disclosure, as shown in FIG. 12 to FIG. 14, the connecting rod mechanism 390 includes a connecting rod 391 and a support 300.

One end of the connecting rod 391 is rotatably connected to the lead screw mechanism 360. The display screen 200 is mounted on the support 300. The other end of the connecting rod 391 is rotatably connected to the support 300. The lead screw mechanism 360 drives one end of the connecting rod 391 to move to cause the other end of the connecting rod 391 to drive the support 300 to flip, thereby driving the display screen 200 to flip between the storage position and the extension position.

In other words, the display screen 200 in this embodiment of the present disclosure may not rotate around a physical shaft. Specifically, the display screen 200 may be fixedly connected to the support 300, and one end of the connecting rod 391 is in transmission connection with the lead screw mechanism 360. When one end of the connecting rod 391 moves along the axial direction of the lead screw mechanism 360, the other end of the connecting rod 391 moves relative to a radial direction of the lead screw mechanism 360. In other words, the other end of the connecting rod 391 moves close to or away from the lead screw mechanism 360 along the radial direction of the lead screw mechanism 360. In this way, the other end of the connecting rod 391 can drive the support 300 to move in a direction close to or away from the lead screw mechanism 360, thereby driving the display screen 200 to flip between the storage position and the extension position.

In some specific embodiments of the present disclosure, as shown in FIG. 13 and FIG. 14, rotating axes at the two ends of the connecting rod 391 are set in parallel and are perpendicular to the axial direction of the lead screw mechanism 360.

The rotating axes at the two ends of the connecting rod 391 are in parallel with the flip axis of the display screen 200. That is, the rotating axes at the two ends of the connecting rod 391 are in parallel with the flip edge 211 of the display surface 210. In this way, the connecting rod 391 does not rotate, enabling the connecting rod 391 to more stably drive the support 300 to rotate, thereby improving stability of the support 300 driving the display screen 200 to rotate, allowing the display screen 200 to rotate more stably.

In some specific embodiments of the present disclosure, as shown in FIG. 13 to FIG. 17, the support 300 includes an arc-shaped plate section 310. The support 300 drives the display screen 200 to flip around a central axis of the arc-shaped plate section 310. The central axis of the arc-shaped plate section 310 coincides with the flip edge 211 of the display surface 210.

A rotating axis of the arc-shaped plate section 310 is set to coincide with the flip edge 211 of the display surface 210. In this way, the support 300 can rotate around the flip edge 211 to then drive the display screen 200 to rotate around the flip edge 211 of the display surface 210, and the position of the flip edge 211 does not change. In this way, a gap between the flip edge 211 and the screen mounting surface 110 of the seat armrest 1 can be prevented from changing or change slightly. Setting in this manner can not only improve dustproof and waterproof performance of the seat armrest 1, but also allows for a neater junction between the display screen 200 and the screen mounting surface 110 when the display screen 200 is in the extension position, providing a more aesthetically pleasing appearance.

In addition, it will be understood that, the support 300 moves in an arc shape during rotation, and through the arrangement of the arc-shaped plate section 310, an area that the arc-shaped plate section 310 passes through during rotation can be smaller. This can not only reduce a volume of the support 300 and space required by the support 300 for the rotation, but also can prevent the support 300 from having positional interference with another component, thereby making it easier for the support 300 to rotate.

In some specific embodiments of the present disclosure, as shown in FIG. 13 to FIG. 17, the support 300 further includes a flat plate section 340. The flat plate section 340 is connected to a side of the arc-shaped plate section 310 in its arc length direction. The display screen 200 is mounted on the flat plate section 340. It will be understood that the display screen 200 is usually also flat in shape. Through the arrangement of the flat plate section 340 on the support 300 and the connection of the flat plate section 340 to the display screen 200, a contact area between the flat plate section 340 and the display screen 200 is larger, making the connection easier, and enabling the connection between the flat plate section 340 and the display screen 200 to be more stable.

In addition, the other end of the connecting rod 391 is rotatably connected to the junction between the flat plate section 340 and the arc-shaped plate section 310. This not only makes it easier for the connecting rod 391 and the support 300 to be connected, but also allows the connecting rod 391 to be connected to the support 300 at a position close to its center, making a support force more even, thereby further improving stability of the posture adjustment assembly 2 driving the display screen 200 to flip.

In some specific embodiments of the present disclosure, as shown in FIG. 13, when the display screen 200 is in the storage position, the arc-shaped plate section 310 is located inside the armrest body 100.

Specifically, the support 300 is connected to a side of the display screen 200 facing away from the display surface 210. When the display screen 200 is in the storage position, the display screen 200 covers the posture adjustment assembly 2, that is, the posture adjustment assembly 2 is located in the armrest body 100 in its entirety, and certainly, the support 300 is also located in the armrest body 100. This not only allows the posture adjustment assembly 2 to be covered by the armrest body 100, providing a more aesthetically pleasing appearance, but also protects the posture adjustment assembly 2 by using the armrest body 100, preventing the user from accidentally coming into contact with the posture adjustment assembly 2, preventing damage to the posture adjustment assembly 2, and providing a better riding experience for the user.

In some specific embodiments of the present disclosure, as shown in FIG. 1 to FIG. 4 and FIG. 12 to FIG. 14, the seat armrest 1 further includes a cover plate 400.

The cover plate 400 is mounted on the display screen 200. When the display screen 200 is in the storage position, the cover plate 400 is located in the storage recess 120. When the display screen 200 is in the extension position, the cover plate 400 covers a portion of the support 300 that extends out of the storage recess 120.

The cover plate 400 may be fixedly mounted to the side of the display screen 200 facing away from the display surface 210. The cover plate 400 may flip together with the display screen 200. In this way, when the display screen 200 is in the storage position, the cover plate 400 may also be located in the storage recess 120. Therefore, the cover plate 400 can be covered by the display screen 200, and the cover plate 400 is not exposed from the armrest body 100, thereby ensuring a neat overall appearance of the seat armrest 1. When the display screen 200 is in the extension position, the cover plate 400 can rotate with the display screen 200 and extend out of the storage recess 120, and the cover plate 400 can cover a portion of the support 300 that is exposed from the storage recess 120, preventing the user from directly viewing the support 300, thereby providing a more aesthetically pleasing appearance. In addition, this can also prevent the user from touching the support 300, and prevent hand pinching during rotation of the support 300, thereby improving safety.

In addition, the cover plate 400 may also be configured to be arc-shaped. In this way, space occupied by the cover plate 400 can also be relatively small, making arrangement easy.

In some specific embodiments of the present disclosure, as shown in FIG. 12 to FIG. 14, the posture adjustment assembly 2 further includes a slide rail bracket 500.

A relative position between the slide rail bracket 500 and the armrest body 100 is fixed. The slide rail bracket 500 is configured with an arc-shaped guide cavity 510. The arc-shaped plate section 310 is slidably fitted in the arc-shaped guide cavity 510 to define rotation of the support 300 around the central axis of the arc-shaped plate section 310. A central axis of the arc-shaped guide cavity 510 coincides with the flip edge 211 of the display surface 210. The arc-shaped guide cavity 510 defines rotation of the support 300 around the flip edge 211 of the display surface 210.

In other words, a position of the slide rail bracket 500 remains unchanged during the flipping process of the display screen 200, the arc-shaped guide cavity 510 of the slide rail bracket 500 can guide the rotation of the support 300 to make the rotation of the support 300 more stable, and the slide rail bracket 500 can also serve to fasten and support the support 300. This allows an overall structure of the posture adjustment assembly 2 to be more stable and the rotation of the support 300 to be smoother, and further improves stability of the rotation of the display screen 200. In addition, the flip edge 211 of the display surface 210 is prevented from deflection, so that the display screen 200 better fits the screen mounting surface 110 during the flipping process.

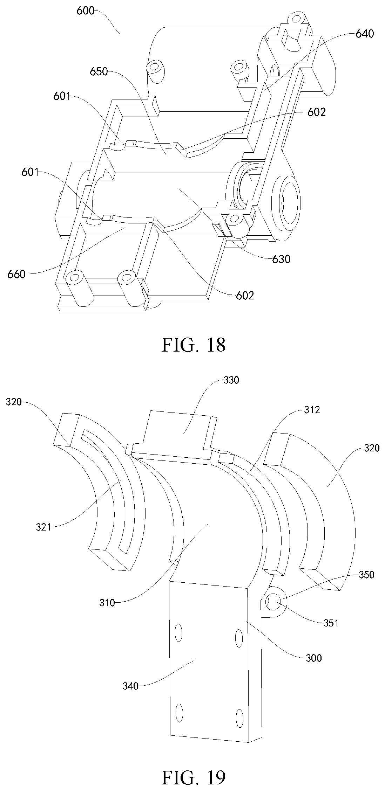

Further, as shown in FIG. 12 and FIG. 18, damping members 320 are arranged between the arc-shaped plate section 310 and an inner wall of the arc-shaped guide cavity 510. The damping member 320 is configured to apply a damping force to the rotation of the support 300.

The damping members 320 each may be a damping sleeve, a spring, a damper, or the like. Through the arrangement of the damping member 320, a damping force between the support 300 and the inner wall of the arc-shaped guide cavity 510 can be increased to make the rotation of the support 300 more stable and prevent rapid rotation of the support 300. This allows the rotation of the display screen 200 to be smoother, making it easier for the user to adjust a rotation position of the display screen 200. Moreover, the damping member 320 can be used to absorb instantaneous impact on the display screen 200 or the support 300, thereby preventing the support 300 from breaking or being damaged. In addition, the damping member 320 can also eliminate a gap between the support 300 and the slide rail bracket 500 and tooth gaps within the posture adjustment assembly 2, thereby avoiding noise caused by any collision between the support 300 and the slide rail bracket 500 and noise of vibration.

In some specific embodiments of the present disclosure, as shown in FIG. 12 and FIG. 19, the damping members 320 are respectively arranged on two axial sides of the arc-shaped plate section 310.

In this way, there is a damping force between both the axial sides of the arc-shaped plate section 310 and the arc-shaped guide cavity 510, so that the damping force between the arc-shaped plate section 310 and the inner wall of the arc-shaped guide cavity 510 is more evenly distributed. This further improves rotational stability of the support 300, allows the display screen 200 to flip more stably and reliably, and prevents the display screen 200 from shaking, thereby providing a better viewing experience for the user.

For example, the damping members 320 each may be a damping sleeve. The damping members 320 each may be provided with a mounting groove 321 on a side facing the arc-shaped plate section 310. Insertion blocks 312 are arranged on the two axial sides of the arc-shaped plate section 310. The insertion blocks 312 may be inserted into the mounting grooves 321 of the damping members 320 to achieve fastening between the damping members 320 and the arc-shaped plate section 310. A thickness of the damping member 320 may be greater than a thickness of the arc-shaped plate section 310, and a thickness of the insertion block 312 may be less than a thickness of the remaining part of the arc-shaped plate section 310. The arc-shaped guide cavity 510 has a first arc-shaped guide wall 511 and a second arc-shaped guide wall 512. The first arc-shaped guide wall 511 and the second arc-shaped guide wall 512 are respectively arranged on two sides of the arc-shaped plate section 310 in a thickness direction of the arc-shaped plate section 310. Each of the damping members 320 is in contact engagement with the first arc-shaped guide wall 511 and the second arc-shaped guide wall 512.

This facilitates assembly of the arc-shaped plate section 310 and the damping member 320. Moreover, after the damping members 320 come into contact with the first arc-shaped guide wall 511 and the second arc-shaped guide wall 512, the arc-shaped plate section 310 is not in contact with the first arc-shaped guide wall 511 or the second arc-shaped guide wall 512. Therefore, wear between the arc-shaped plate section 310 and the first arc-shaped guide wall 511 and the second arc-shaped guide wall 512 can be avoided, and friction between the support 300 and the slide rail bracket 500 can be reduced, making it easier for the support 300 to rotate. In addition, the arc-shaped guide cavity 510 can guide the two damping members 320 simultaneously, reducing an assembly error between the two damping members 320. This helps reduce a transmission error between gears in the posture adjustment assembly 2.

In some specific embodiments of the present disclosure, as shown in FIG. 12, the posture adjustment assembly 2 further includes a housing 600 and a drive mechanism 700.

The housing 600 is mounted on the armrest body 100. The drive mechanism 700 is mounted on the housing 600. The lead screw mechanism 360 is in transmission connection with the drive mechanism 700. The drive mechanism 700 drives, through the lead screw mechanism 360 and the connecting rod 391, the support 300 to rotate around the central axis of the arc-shaped plate section 310 to cause the display screen 200 to flip between the storage position and the extension position.

The drive mechanism 700 may be a motor. The posture adjustment assembly 2 can automatically drive, through the drive mechanism 700, the support 300 to rotate, thereby achieving automatic flipping of the display screen 200. Compared with manual flipping of the display screen 200, this operation is easier and faster, providing a better user experience.

Moreover, all components of the posture adjustment assembly 2, such as the drive mechanism 700, the lead screw mechanism 360, and the connecting rod mechanism 390, may be mounted in the housing 600. The support 300 may be located in the housing 600 when the display screen 200 is in the storage position, and may extend out of the housing 600 when the display screen 200 is in the extension position.

For example, the posture adjustment assembly 2 may have a power-off reset function. When the vehicle is powered off, the posture adjustment assembly 2 drives the display screen 200 to automatically return to a horizontal state of the storage position.

In some specific embodiments of the present disclosure, as shown in FIG. 12, the drive mechanism 700 is arranged on a side of the lead screw mechanism 360 in its radial direction. In this way, the drive mechanism 700 and the lead screw mechanism 360 may be arranged along the radial direction of the lead screw mechanism 360, and the drive mechanism 700 and the lead screw mechanism 360 may coincide with each other in an axial direction of the lead screw mechanism 360. It will be understood that, an axial length of the lead screw mechanism 360 is greater than a radial length thereof. This arrangement can prevent overall axial lengths of the drive mechanism 700 and the lead screw mechanism 360 from being excessively large, thereby helping reduce space occupied by the posture adjustment assembly 2, allowing a volume of the posture adjustment assembly 2 to be smaller, and making arrangement and mounting easy.

In some specific embodiments of the present disclosure, as shown in FIG. 12 to FIG. 14 and FIG. 20, the lead screw mechanism 360 includes a lead screw 370 and a first nut 374.

The lead screw 370 is in transmission connection with the drive mechanism 700. The first nut 374 is sleeved over the lead screw 370 and in threaded fit with the lead screw 370. One end of the connecting rod 391 is rotatably connected to the first nut 374. In this way, when the drive mechanism 700 drives the lead screw 370 to rotate, the rotation of the lead screw 370 can be converted into linear movement of the first nut 374 through the threaded fit between the first nut 374 and the lead screw 370. Then, the drive mechanism 700 can drive the lead screw 370 to rotate forward and backward to cause the first nut 374 to move back and forth along an axial direction of the lead screw 370. The end of the connecting rod 391 connected to the display screen 200 can rotate relative to the end of the connecting rod 391 connected to the first nut 374, thereby driving the display screen 200 to flip between the storage position and the extension position.

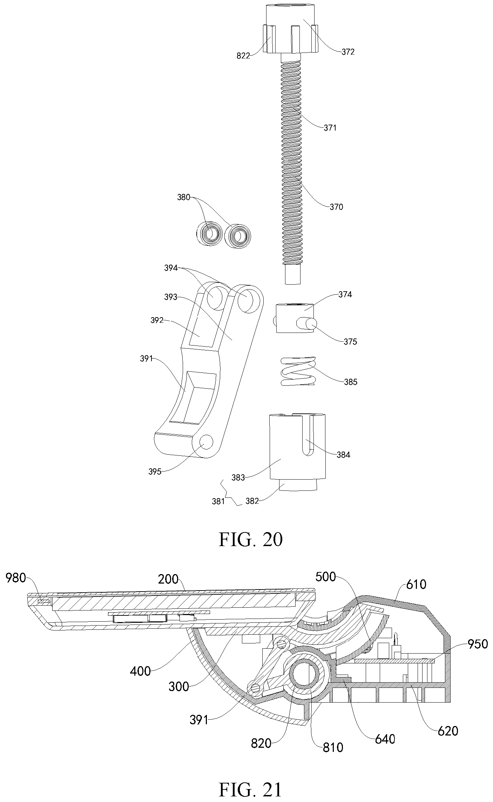

Further, as shown in FIG. 20, one of the first nut 374 and one end of the connecting rod 391 is provided with a first connecting rod shaft 375, and the other is provided with a first shaft hole 394. The first connecting rod shaft 375 is rotatably fitted in the first shaft hole 394.

For example, the first nut 374 may be provided with the first connecting rod shaft 375, and the connecting rod 391 is provided with the first shaft hole 394. This allows the first connecting rod shaft 375 to extend into the first shaft hole 394, enabling the connecting rod 391 to rotate relative to the first nut 374. When the drive mechanism 700 drives the lead screw 370 to rotate, the first nut 374 moves along the axial direction of the lead screw 370. The connecting rod 391 may rotate relative to the first nut 374 while following the first nut 374 to move along the axial direction of the lead screw 370. Then, an end of the connecting rod 391 away from the first nut 374 can drive the support 300 to rotate, thereby achieving flipping of the display screen 200. In addition, setting in this manner simplifies a connection structure between the first nut 374 and the connecting rod 391, thereby not only achieving connection and fastening of the first nut 374 and the connecting rod 391, preventing separation of the first nut 374 and the connecting rod 391, but also enabling the connecting rod 391 to rotate relative to the first nut 374.

In some specific embodiments of the present disclosure, as shown in FIG. 20, one end of the connecting rod 391 is configured with a first connecting plate 392 and a second connecting plate 393 that are arranged spaced apart.

The first connecting plate 392 and the second connecting plate 393 are respectively arranged on two radially opposite sides of the first nut 374. The first connecting plate 392 and the second connecting plate 393 are each provided with a first shaft hole 394. The two radially opposite sides of the first nut 374 are respectively provided with first connecting rod shafts 375 inserted into the corresponding first shaft holes 394.

In this way, the first connecting plate 392 and the second connecting plate 393 can respectively abut against the two radially opposite sides of the first nut 374. The first connecting plate 392 abuts against one radial side of the first nut 374, thereby preventing the connecting rod 391 from deflecting in a direction toward the second connecting plate 393. The second connecting plate 393 abuts against the other radial side of the first nut 374, thereby preventing the connecting rod 391 from deflecting in a direction toward the first connecting plate 392. This allows for a more stable fit between the first connecting rod shaft 375 and the first shaft hole 394, preventing the connecting rod 391 from falling off the first nut 374, thereby making the connection between the connecting rod 391 and the first nut 374 more stable.

In addition, it should be noted that the first connecting plate 392 and the second connecting plate 393 each have a particular elastic deformation capability, so that during assembly of the connecting rod 391 and the first nut 374, the first connecting plate 392 and the second connecting plate 393 can be bent to increase a distance between the first connecting plate 392 and the second connecting plate 393, thereby facilitating insertion of the first connecting rod shaft 375 into the first shaft hole 394 of the first connecting plate 392 and the first shaft hole 394 of the second connecting plate 393, respectively.

In some specific embodiments of the present disclosure, as shown in FIG. 20, a bearing 380 is arranged between an outer circumferential surface of the first connecting rod shaft 375 and an inner circumferential surface of the first shaft hole 394. The bearing 380 may be a ball bearing. Through the arrangement of the bearing 380, friction between the first connecting rod shaft 375 and the first shaft hole 394 can be reduced. Therefore, resistance of the connecting rod 391 when rotating relative to the first nut 374 is smaller. This not only reduces wear of the connecting rod 391 and wear of the first nut 374, but also makes the rotation of the connecting rod 391 easier and further improves stability of the rotation of the connecting rod 391. In this way, the posture adjustment assembly 2 can more stably drive the display screen 200 to flip.

In some specific embodiments of the present disclosure, as shown in FIG. 12 to FIG. 14, and FIG. 20, the lead screw mechanism 360 further includes a second nut 381 and an elastic member 385.

The second nut 381 is sleeved over the lead screw 370 and is in threaded fit with the lead screw 370. The elastic member 385 is sleeved over the lead screw 370 and abuts between the first nut 374 and the second nut 381.

It will be understood that during a manufacturing process, to ensure that the first nut 374 can be sleeved over the lead screw 370 and prevent excessive frictional resistance between the first nut 374 and the lead screw 370, a gap is usually required for the threaded fit between the first nut 374 and the lead screw 370. Through the arrangement of the second nut 381 and the abutment of the elastic member 385 between the first nut 374 and the second nut 381, an elastic force of the elastic member 385 enables internal threads of the first nut 374 and internal threads of the second nut 381 to be always pressed against threads on the lead screw 370, thereby eliminating a transmission gap between the lead screw 370 and the first nut 374. This prevents the first nut 374 from radial or axial wobbling relative to the lead screw 370 and more effectively prevents the display screen 200 from wobbling, thereby making both the fastening and flipping of the display screen 200 more stable.

In some specific embodiments of the present disclosure, as shown in FIG. 20, the second nut 381 includes a nut body 382 and an accommodation ring 383.

The nut body 382 is sleeved over the lead screw 370 and in threaded fit with the lead screw 370. The elastic member 385 abuts between the first nut 374 and the nut body 382. The accommodation ring 383 is connected to a side of the nut body 382 facing the first nut 374 and surrounds the elastic member 385 and the first nut 374.

Through the arrangement of the accommodation ring 383 on the second nut 381, the accommodation ring 383 can accommodate the elastic member 385 and the first nut 374. In other words, the first nut 374 and the elastic member 385 can both be located inside the second nut 381. In this way, the second nut 381 can cover the elastic member 385 and the first nut 374 to protect the elastic member 385 and the first nut 374, and prevent the elastic member 385 from colliding with another component and failing.

In addition, a circumferential wall of the accommodation ring 383 is provided with a notch 384 extending along an axial direction of the accommodation ring 383. The first connecting rod shaft 375 is movably fitted in the notch 384. In this way, the second nut 381 can use the notch 384 to prevent positional interference between the accommodation ring 383 and the first connecting rod shaft 375.

Moreover, after the first connecting rod shaft 375 extends into the notch 384, the notch 384 can respectively abut against two radially opposite sides of the first connecting rod shaft 375 along two circumferentially opposite sides of the accommodation ring 383. When the drive mechanism 700 drives the lead screw 370 to rotate to cause the first nut 374 to move in a direction toward the second nut 381, the first nut 374 can push, through the elastic member 385, the second nut 381 to move together, thereby achieving flipping of the display screen 200 from the storage position to the extension position (or flipping of the display screen 200 from the extension position to the storage position flip). When the drive mechanism 700 drives the lead screw 370 to rotate to cause the first nut 374 to move in a direction away from the second nut 381, because the two radially opposite sides of the first connecting rod shaft 375 respectively abut against side walls of the notch 384, the first connecting rod shaft 375 and the second nut 381 cannot rotate relative to each other. In other words, the first nut 374 and the second nut 381 do not rotate relative to each other, causing the second nut 381 to follow the first nut 374 to rotate relative to the lead screw 370, thereby achieving flipping of the display screen 200 from the extension position to the storage position (or flipping of the display screen 200 from the storage position to the extension position).

In some specific embodiments of the present disclosure, as shown in FIG. 12, the drive mechanism 700 is a motor. The posture adjustment assembly 2 further includes a speed reduction and torque increase mechanism 900. The lead screw 370 is in transmission connection with the drive mechanism 700 through the speed reduction and torque increase mechanism 900. The speed reduction and torque increase mechanism 900 includes a first-stage worm 910, a first-stage gear 920, a second-stage worm 930, and a second-stage gear 940.

The first-stage worm 910 is sleeved over a motor shaft of the motor and is driven by the motor shaft to rotate. The first-stage gear 920 is mounted on the housing 600 and engaged with the first-stage worm 910. The second-stage worm 930 is mounted on the housing 600 and rotates synchronously with the first-stage gear 920. The second-stage gear 940 is sleeved over the lead screw 370 and rotates synchronously with a gear shaft. The second-stage gear 940 is engaged with the second-stage worm 930.

In this way, when needing to rotate the display screen 200, the user can start the drive mechanism 700, and the drive mechanism 700 can drive the first-stage worm 910 to rotate. In addition, power can be transferred to the lead screw mechanism 360 sequentially through the first-stage worm 910, the first-stage gear 920, the second-stage worm 930, and the second-stage gear 940, and then, the lead screw mechanism 360 and the connecting rod mechanism 390 drive the display screen 200 to flip. Moreover, through gear-tooth fitting of the speed reduction and torque increase mechanism 900, a rotational speed transferred from the drive mechanism 700 to the lead screw mechanism 360 can be effectively reduced, thereby increasing torque transferred from the drive mechanism 700 to the lead screw mechanism 360, allowing the display screen 200 to flip more stably.

Further, as shown in FIG. 12 to FIG. 14, a central axis of the first-stage worm 910 coincides with a central axis of the motor shaft. A central axis of the first-stage gear 920 coincides with a central axis of the second-stage worm 930 and is perpendicular to the central axis of the first-stage worm 910. A central axis of the second-stage gear 940 coincides with a central axis of the lead screw 370 and is perpendicular to the second-stage worm 930. In this way, the drive mechanism 700, the first-stage worm 910, the first-stage gear 920, the second-stage worm 930, and the second-stage gear 940 have a more compact structural layout, enabling the drive mechanism 700, the first-stage worm 910, the first-stage gear 920, the second-stage worm 930, and the second-stage gear 940 to occupy smaller space, thereby making the arrangement easy.

In some specific embodiments of the present disclosure, as shown in FIG. 19 and FIG. 20, the lead screw 370 includes a threaded section 371 and a connecting section 372 that are connected to each other. A cross-sectional area of the connecting section 372 is larger than a cross-sectional area of the threaded section 371. The first nut 374 is sleeved over the threaded section 371 and in threaded fit with the threaded section 371. In this way, an end of the connecting section 372 facing the threaded section 371 can limit abutment of the first nut 374, preventing the first nut 374 from moving to the connecting section 372 or even falling off the lead screw 370, thereby making the engagement between the first nut 374 and the lead screw 370 more stable and reliable.

In addition, one of an outer circumferential surface of the connecting section 372 and an inner circumferential surface of the second-stage gear 940 is provided with transmission ribs 822 and the other is provided with transmission grooves 941. The transmission ribs 822 are inserted into the transmission grooves 941 to cause the second-stage gear 940 to rotate synchronously with the gear shaft 820.

For example, the outer circumferential surface of the connecting section 372 may be provided with the transmission ribs 822 and the inner circumferential surface of the second-stage gear 940 may be provided with the transmission grooves 941. In this way, when the drive mechanism 700 operates, the second-stage gear 940 can transfer power to the lead screw 370 through engagement between the transmission grooves 941 and the transmission ribs 822, thereby allowing the lead screw 370 to rotate synchronously with the second-stage gear 940. Moreover, through transmission engagement between the transmission grooves 941 and the transmission ribs 822, power transmission between the second-stage gear 940 and the lead screw 370 is more stable and reliable.

Further, as shown in FIG. 20, the plurality of transmission ribs 822 are spaced apart along a circumferential direction of the connecting section 372. The plurality of transmission grooves 941 are spaced apart along a circumferential direction of the second-stage gear 940. The plurality of transmission ribs 822 are inserted into the plurality of transmission grooves 941 in a one-to-one correspondence.

In this way, when the second-stage gear 940 transfers power to the lead screw 370, circumferential forces acting on the second-stage gear 940 and the lead screw 370 are more evenly distributed, allowing the power transmission between the second-stage gear 940 and the lead screw 370 to be more stable and reliable, thereby more effectively preventing power transmission failure between the second-stage gear 940 and the lead screw 370. For example, when one of the plurality of transmission ribs 822 and one of the plurality of transmission grooves 941 are damaged and fail, the engagement between the remaining plurality of transmission ribs 822 and the remaining plurality of transmission grooves 941 can still ensure the power transmission between the second-stage gear 940 and the lead screw 370.

In some specific embodiments of the present disclosure, as shown in FIG. 20, the transmission ribs 822 are each arranged on the outer circumferential surface of the connecting section 372. The transmission ribs 822 each have a guide portion at an end facing away from the threaded section 371. The guide portion has a height gradually decreasing in a direction away from the threaded section 371. In this way, during assembly of the connecting section 372 and the second-stage gear 940, the guide portion can provide assembly guidance for the engagement between the transmission ribs 822 and the transmission grooves 941. This helps simplify steps of assembling the connecting section 372 and the second-stage gear 940, making the assembly easier.

In some specific embodiments of the present disclosure, as shown in FIG. 18, the housing 600 is configured with a first limiting surface 601 and a second limiting surface 602.

The support 300 abuts against the first limiting surface 601 when the display screen 200 flips from the extension position to the storage position. The support 300 abuts against the second limiting surface 602 when the display screen 200 flips from the storage position to the extension position. In this way, a flip range of the display screen 200 can be determined to be from the storage position to the extension position, thereby preventing the display screen 200 from being damaged by excessive flipping.

In some specific embodiments of the present disclosure, as shown in FIG. 18, the housing 600 has a first limiting rib 650 and a second limiting rib 660. The first limiting rib 650 and the second limiting rib 660 are arranged spaced apart. The connecting rod 391 is located between the first limiting rib 650 and the second limiting rib 660. The first limiting rib 650 is formed with a first limiting surface 601 and a second limiting surface 602. The second limiting rib 660 is formed with a first limiting surface 601 and a second limiting surface 602.

Specifically, the first limiting rib 650 and the second limiting rib 660 are respectively located on two radially opposite sides of the lead screw 370. When the display screen 200 is in the storage position, the support 300 can simultaneously abut against the first limiting surface 601 of the first limiting rib 650 and the first limiting surface 601 of the second limiting rib 660. When the display screen 200 flips to the extension position, the support 300 can simultaneously abut against the second limiting surface 602 of the first limiting rib 650 and the second limiting surface 602 of the second limiting rib 660. This allows for limiting of the display screen 200 in the storage position and the extension position.

In addition, limiting the support 300 by arranging the two limiting ribs can prevent the support 300 from deflecting or wobbling after abutting against a single limiting rib. This helps improve a limiting effect for the support 300, thereby enabling the display screen 200 to remain stable in both the storage position and the extension position.

In some specific embodiments of the present disclosure, as shown in FIG. 19 and FIG. 20, the support 300 is configured with a first lug 350. The first lug 350 is provided with a second shaft hole 351. The other end of the connecting rod 391 is provided with a third shaft hole 395. The other end of the connecting rod 391 is fitted into the second shaft hole 351 and the third shaft hole 395 to cause the second connecting rod shaft 352 to be rotatably connected to the support 300. Then, the connecting rod 391 can rotate to push the support 300 to rotate along a rotating axis of the arc-shaped plate section 310, thereby achieving flipping of the display screen 200 along the flip edge 211 of the display surface 210.

In addition, when the display screen 200 flips from the extension position to the storage position, the first lug 350 abuts against the first limiting surface 601. In this way, the first lug 350 can be used to connect the support 300 and the connecting rod 391 to achieve relative rotation of the support 300 and the connecting rod 391, and can also be used to limit the support 300 to achieve limiting of the display screen 200 in the storage position. Therefore, there is no need to additionally arrange a structure for limiting with the first limiting surface 601, thereby helping simplify the structure of the support 300.

Further, as shown in FIG. 18 and FIG. 19, the support 300 further includes a limiting folding plate 330. The limiting folding plate 330 is connected to a side of the arc-shaped plate section 310 away from the display screen 200 in an arc length direction. The limiting folding plate 330 abuts against the first limiting surface 601 when the display screen 200 flips from the storage position to the extension position, so that the display screen 200 can be limited in the extension position, thereby achieving more accurate and reliable positioning, and preventing excessive rotation of the display screen 200.

In some specific embodiments of the present disclosure, as shown in FIG. 12 to FIG. 14, the housing 600 includes an upper cover 610, a lower cover 620, a mounting bracket 640, and a slide rail bracket 500.

The upper cover 610 and the lower cover 620 are connected to each other and jointly define a mounting cavity 630. The mounting bracket 640 and a circuit board are mounted on the lower cover 620 and located in the mounting cavity 630. The drive mechanism 700 and the lead screw mechanism 360 are mounted on the mounting bracket 640. The slide rail bracket 500 is mounted on the mounting bracket 640. The slide rail bracket 500 and the lower cover 620 are respectively arranged on two opposite sides of the mounting bracket 640. The arc-shaped plate section 310 fits the slide rail bracket 500 to define rotation of the support 300 around the central axis of the arc-shaped plate section 310.

In this way, the upper cover 610 and the lower cover 620 can cover the drive mechanism 700, the lead screw mechanism 360, the connecting rod mechanism 390, the mounting bracket 640, the slide rail bracket 500, and other components and parts, allowing the posture adjustment assembly 2 to have a more aesthetically pleasing appearance. In addition, this can prevent the user from directly touching the drive mechanism 700 or the lead screw mechanism 360 or the connecting rod mechanism 390, thereby improving safety. Moreover, the posture adjustment assembly 2 can further fasten the drive mechanism 700, the lead screw mechanism 360, the slide rail bracket 500, and other components and parts by using the mounting bracket 640, allowing the components of the posture adjustment assembly 2 to be more stably connected and fastened. This manner of fastening a plurality of parts by one mounting bracket 640 reduces an assembly error and better controls a gear center distance, thereby appropriately reducing gear transmission noise.

In some specific embodiments of the present disclosure, as shown in FIG. 13 and FIG. 14, the seat armrest 1 further includes a gesture acquisition apparatus 980.

The gesture acquisition apparatus 980 is connected to the posture adjustment assembly 2. The posture adjustment assembly 2 drives, based on gesture information acquired by the gesture acquisition apparatus 980, the display screen 200 to be switched between the storage position and the extension position.

For example, the gesture acquisition apparatus 980 may be an infrared sensing module. In this way, the gesture acquisition apparatus 980 can acquire gesture information of a user, and the user can control accommodation and extension of the posture adjustment assembly 2 by using different gesture information, thereby controlling the display screen 200 to be accommodated, extended, or flipped to different angles. For example, when the user raises a hand, the display screen 200 can rotate upward following the gesture, and when the hand moves downward, the display screen 200 can rotate downward following the gesture. This further simplifies user operations, and the user does not need to switch the position of the display screen 200 by touching the display screen 200 or pressing a button, resulting in easier and faster operations, thereby helping improve operating experience of the user.

In some specific embodiments of the present disclosure, the seat armrest 1 further includes a fingerprint acquisition apparatus. The fingerprint acquisition apparatus may be a touchscreen.

The fingerprint acquisition apparatus is connected to the posture adjustment assembly 2. The posture adjustment assembly 2 drives, based on fingerprint information acquired by the fingerprint acquisition apparatus, the display screen 200 to be switched between the storage position and the extension position.

Specifically, when a different user saves information about a flip angle of the display screen 200, the user can record a fingerprint through the fingerprint acquisition apparatus. When the user uses the display screen 200 next time, the user presses a finger onto the fingerprint acquisition apparatus, and then the fingerprint acquisition apparatus can control, based on information about the fingerprint, the posture adjustment assembly 2 to drive the display screen 200 to flip to a position corresponding to the information about the fingerprint. In other words, the display screen 200 can have a plurality of memory positions. The plurality of memory positions respectively correspond to different fingerprint information. When a different user uses the display screen 200, the display screen 200 can flip to a flip angle corresponding to fingerprint information of the user, thereby further improving usage experience of the user.

Certainly, the same user can record a plurality of fingerprints. The plurality of fingerprints can respectively correspond to different flip angles of the display screen 200. When the user presses the fingerprint acquisition apparatus with different fingers, the fingerprint acquisition apparatus can control, based on acquired fingerprint information, the posture adjustment assembly 2 to rotate to drive the display screen 200 to flip to positions corresponding to the fingerprints of the fingers. In this way, the same user can also save a plurality of flip angles of the display screen 200. Therefore, usage requirements of different users are more effectively satisfied.

The following is a brief description of steps for the posture adjustment assembly 2 to drive the display screen 200 to flip in this embodiment:
first, the user starts the drive mechanism 700. The drive mechanism 700 drives the first-stage worm 910 to rotate. The first-stage worm 910 transfers power to the first-stage gear 920, the second-stage worm 930, and the second-stage gear 940 sequentially. The second-stage gear 940 rotates;
then, the second-stage gear 940 transfers power to the lead screw 370 and drives the lead screw 370 to rotate synchronously. The first nut 374 moves along the axial direction of the lead screw 370;
finally, the connecting rod 391 follows the first nut 374 to move along the axial direction of the lead screw 370 and rotate relative to the first nut 374. During the movement, the connecting rod 391 also pushes the support 300 to rotate, and the display screen 200 follows the support 300 to rotate, thereby enabling flipping of the display screen 200.

The following is a brief description of steps for assembling the posture adjustment assembly 2 in this embodiment:
first, the first-stage worm 910 and the drive mechanism 700 are connected, and after being connected, the drive mechanism 700 and the mounting bracket 640 are fastened with two screws;
then, the second-stage gear 940 is sleeved over the lead screw 370, and the first nut 374, the elastic member 385, and the second nut 381 are sequentially sleeved onto the lead screw 370. In this case, the elastic member 385 needs to be in a particular state of compression. Then, the first nut 374, the elastic member 385, and the second nut 381 are screwed together onto the lead screw 370;
next, the connecting rod 391 is fastened to the first nut 374 through two bearings 380 and then connected to the mounting bracket 640. In addition, the lower cover 620, the first-stage gear 920, and the second-stage worm 930 are sequentially fastened to the mounting bracket 640;
then, the two damping sleeves are respectively sleeved over two axially opposite sides of the support 300 and mounted into the slide rail bracket 500, and then fastened to the mounting bracket 640 with screws;
finally, the upper cover 610 and the lower cover 620 are fastened, and then the support 300 and the cover plate 400 are sequentially connected to the display screen 200.

A seat armrest 1 according to still another embodiment of the present disclosure is described below with reference to the accompanying drawings.

As shown in FIG. 21 to FIG. 26, the seat armrest 1 according to this embodiment of the present disclosure includes an armrest body 100, a posture adjustment assembly 2, and a display screen 200.

The armrest body 100 has a screen mounting surface 110. The screen mounting surface 110 is provided with a storage recess 120. The posture adjustment assembly 2 is arranged on the armrest body 100. The display screen 200 has a display surface 210. The posture adjustment assembly 2 includes a transmission mechanism 800 and a connecting rod mechanism 390. The connecting rod mechanism 390 is rotatably connected to the transmission mechanism 800. The display screen 200 is mounted on the connecting rod mechanism 390. The transmission mechanism 800 drives along its circumferential direction the connecting rod mechanism 390 to move to drive the display screen 200 to flip between a storage position and an extension position.

When the display screen 200 is in the storage position, the display screen 200 is accommodated in the storage recess 120, and the display surface 210 is flush with the screen mounting surface 110. When the display screen 200 is in the extension position, at least part of the display screen 200 is located outside the storage recess 120, an edge of the display surface 210 adjacent to the screen mounting surface 110 constitutes a flip edge 211, and the flip edge 211 is flush with the screen mounting surface 110.

There may be a plurality of extension positions for the display screen 200. In this way, the display screen 200 can hover in different extension positions, and therefore, angles of the extension positions of the display screen 200 can be adjusted based on user requirements.

For example, the screen mounting surface 110 may be an upper surface of the armrest body 100. In this case, a flip axis of the display screen 200 may extend along a lateral direction of a vehicle, and a rear edge of the display screen 200 along a longitudinal direction of the vehicle constitutes a flip edge, allowing the display screen 200 to flip from front to rear. Alternatively, the screen mounting surface 110 may be a side surface of the armrest body 100. In this case, a flip axis of the display screen 200 may extend along a vertical direction of a vehicle, and an upper edge of the display screen 200 along the vertical direction of the vehicle constitutes a flip edge, allowing the display screen 200 to flip from bottom to top. Certainly, the flip axis and a flip direction of the display screen 200 may alternatively be adjusted based on different actual requirements.

In the seat armrest 1 according to this embodiment of the present disclosure, the armrest body 100 is provided with the screen mounting surface 110, and the screen mounting surface 110 is provided with the storage recess 120. The screen mounting surface 110 of the armrest body 100 may be the upper or side surface of the armrest body 100. The storage recess 120 may accommodate the display screen 200. The posture adjustment assembly 2 is arranged on the armrest body 100. The display screen 200 has the display surface 210. The display screen 200 is mounted on the posture adjustment assembly 2. The posture adjustment assembly 2 drives the display screen 200 to flip between the storage position and the extension position.

In this way, the display screen 200 may be switched between the storage position and the extension position. When a user needs to view the display screen 200, the display screen 200 is flipped to the extension position through the posture adjustment assembly 2 to facilitate viewing by the user, thereby improving the user's viewing experience. When the user does not need to view the display screen 200, the display screen 200 may be flipped to the storage position through the posture adjustment assembly 2. This may reduce space occupied by the display screen 200, thereby improving in-vehicle space. In addition, after the display screen 200 is accommodated in the storage recess 120, a possibility of accidental contact with the display screen 200 when the display screen 200 is not in use can be reduced, thereby helping protect the display screen 200 and prevent damage to the display screen 200.

It should be noted that the display screen 200 does not necessarily hover in the extension position only; instead, the display screen 200 can hover in any position between the storage position and the extension position. When the display screen 200 is in the extension position, an angle between the screen mounting surface 110 and the display surface 210 may be not less than 60° and not greater than 90°. When the display screen 200 is in the storage position, the angle between the screen mounting surface 110 and the display surface 210 may be 0°.

In addition, when the display screen 200 is in the storage position, the display screen 200 is accommodated in the storage recess 120, and the display surface 210 is flush with the screen mounting surface 110. This can not only improve an accommodation effect of the storage recess 120 for the display screen 200, allowing the display screen 200 not to protrude from the screen mounting surface 110, further reducing the possibility of accidental contact with the display screen 200, thereby better protecting the display screen 200, but also minimize space occupied by the display screen 200 when in the storage position. Moreover, a transition between the display screen 200 and the screen mounting surface 110 is smoother, eliminating any height difference at the transition between the display screen 200 and the screen mounting surface 110, thereby preventing dust accumulation at the transition between the display screen 200 and the screen mounting surface 110, allowing an appearance of the seat armrest 1 to be cleaner and neater.

Furthermore, when the display screen 200 is in the extension position, at least part of the display screen 200 is located outside the storage recess 120, the edge of the display surface 210 adjacent to the screen mounting surface 110 constitutes the flip edge 211, and the flip edge 211 is flush with the screen mounting surface 110. In this way, when the display screen 200 flips from the storage position to the extension position, the flip edge 211 can always be flush with the screen mounting surface 110. In other words, in a process in which the display screen 200 flips from the storage position to the extension position, a position of the flip edge 211 of the display screen 200 may remain unchanged. This can prevent the display screen 200 from moving forward or downward in its entirety, allowing the display screen 200 to have better rotational stability, require smaller space to move, and provide easier viewing for the user after being rotated to the extension position, thereby improving the viewing experience. Moreover, a gap between the display screen 200 and the armrest body 100 does not change or changes slightly, thereby preventing dust from accumulating at the transition. This avoids hand pinching while allowing the appearance of the seat armrest 1 to be cleaner and neater, thereby providing a better user experience.

In this way, the seat armrest 1 according to this embodiment of the present disclosure can accommodate and lift the display screen 200, and the display screen 200 requires relatively small space to move, offering advantages such as small occupation space, easy viewing, and clear and neat appearance.

According to some specific embodiments of the present disclosure, as shown in FIG. 1 to FIG. 4, an axial direction of the transmission mechanism 800 is set in parallel with the flip axis of the display screen 200. In this way, a size of the posture adjustment assembly 2 in a direction perpendicular to the flip axis of the display screen 200 can be reduced, helping make the posture adjustment assembly 2 smaller, thereby enabling the posture adjustment assembly 2 to be suitable for an armrest body 100 whose size is relatively small in the direction perpendicular to the flip axis of the display screen 200.

In some specific embodiments of the present disclosure, as shown in FIG. 1 to FIG. 4, the flip axis of the display screen 200 coincides with the flip edge 211 of the display surface 210.

Specifically, the display screen 200 may be fastened to the posture adjustment assembly 2 and drive, through the posture adjustment assembly 2, the display screen 200 to flip. During a flipping process, the display screen 200 may flip around the flip edge 211 of the display surface 210, and the position of the flip edge 211 may remain unchanged. It will be understood that the flip edge 211 of the display surface 210 is a side edge of an upper surface of the display screen 200. Setting in this manner can prevent a gap change or a height difference from occurring between the flip edge 211 and the screen mounting surface 110 during the flipping process of the display screen 200, thereby preventing a height of the display screen 200 from dropping, and maintaining the flip edge 211 and the screen mounting surface 110 to be flush with each other, allowing the display screen 200 to have better rotational stability.

According to some specific embodiments of the present disclosure, as shown in FIG. 21 to FIG. 24, the connecting rod mechanism 390 includes a connecting rod 391 and a support 300.

One end of the connecting rod 391 is rotatably connected to the transmission mechanism 800. The display screen 200 is mounted on the support 300. The other end of the connecting rod 391 is rotatably connected to the support 300. The transmission mechanism 800 drives one end of the connecting rod 391 to rotate to cause the other end of the connecting rod 391 to drive the support 300 to flip, thereby driving the display screen 200 to flip between the storage position and the extension position.

Through the arrangement of the support 300, a connection area between the posture adjustment assembly 2 and the display screen 300 can be increased, thereby ensuring reliability of the connection between the posture adjustment assembly 2 and the display screen 300. Through the arrangement of the connecting rod 391, power transmission and displacement between the support 300 and the transmission mechanism 800 can be implemented, thereby enabling the support 300 to drive the display screen 200 to be switched between the storage position and the extension position.

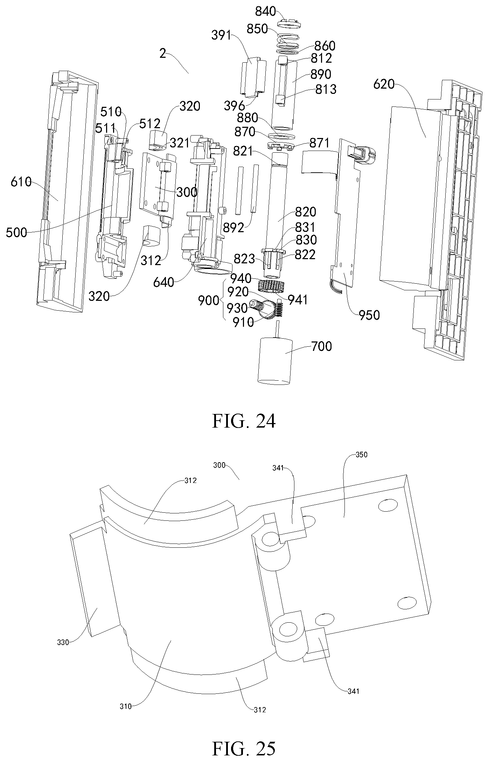

According to some specific embodiments of the present disclosure, as shown in FIG. 24, rotating axes at the two ends of the connecting rod 391 are set in parallel and are parallel to the axial direction of the transmission mechanism 800. In this way, a size of the posture adjustment assembly 2 in a direction perpendicular to the flip axis of the display screen 200 can be reduced, helping make the posture adjustment assembly 2 smaller, thereby enabling the posture adjustment assembly 2 to be suitable for an armrest body 100 whose size is relatively small in the direction perpendicular to the flip axis of the display screen 200.

According to some specific embodiments of the present disclosure, as shown in FIG. 24 and FIG. 25, the support 300 includes an arc-shaped plate section 310. The support 300 drives the display screen 200 to flip around a central axis of the arc-shaped plate section 310. The central axis of the arc-shaped plate section 310 coincides with the flip edge 211 of the display surface 210.

In other words, the display screen 200 in this embodiment of the present disclosure may not rotate around a physical shaft. In addition, a rotating axis of the support 300 is set to coincide with the flip edge 211 of the display surface 210. In this way, when the support 300 rotates, the display screen 200 may be driven to rotate around the flip edge 211 of the display surface 210, and the position of the flip edge 211 does not change, thereby preventing a change in a gap between the flip edge 211 and the screen mounting surface 110 of the seat armrest 1. This can not only improve dustproof and waterproof performance of the seat armrest 1, but also allows for a neater junction between the display screen 200 and the screen mounting surface 110 when the display screen 200 is in the extension position, providing a more aesthetically pleasing appearance.

In addition, it will be understood that, the support 300 moves in an arc shape during rotation, and through arrangement of the arc-shaped plate section 310, an area passed by the arc-shaped plate section 310 during rotation can be smaller. This can not only reduce a volume of the support 300 and space required by the support 300 for the rotation, but also can prevent the support 300 from having position interference with another component, thereby making it easier for the support 300 to rotate.

According to some specific embodiments of the present disclosure, as shown in FIG. 24 to FIG. 25, the support 300 further includes a flat plate section 340. The flat plate section 340 is connected to a side of the arc-shaped plate section 310 in its arc length direction. The display screen 200 is mounted on the flat plate section 340. One end of the connecting rod 391 is rotatably connected to a junction between the flat plate section 340 and the arc-shaped plate section 310. This helps improve stability of the support 300 during movement, thereby improving stability of the display screen 200 moving between the storage position and the extension position and reducing a probability that the display screen 200 wobbles.

According to some specific embodiments of the present disclosure, as shown in FIG. 21, when the display screen 200 is in the storage position, the arc-shaped plate section 310 is located inside the armrest body 100.

Specifically, the support 300 is connected to a side of the display screen 200 facing away from the display surface 210. When the display screen 200 is in the storage position, the display screen 200 covers the posture adjustment assembly 2, that is, the posture adjustment assembly 2 is located in the armrest body 100 in its entirety, and certainly, the support 300 is also located in the armrest body 100. This not only allows the posture adjustment assembly 2 to be covered by the armrest body 100, providing a more aesthetically pleasing appearance, but also protects the posture adjustment assembly 2, preventing the user from accidentally coming into contact with the posture adjustment assembly 2, preventing damage to the posture adjustment assembly 2, and providing a better riding experience for the user.

In some specific embodiments of the present disclosure, as shown in FIG. 2 to FIG. 4 and FIG. 21, the seat armrest 1 further includes a cover plate 400.

The cover plate 400 is mounted on the display screen 200. When the display screen 200 is in the storage position, the cover plate 400 is located in the storage recess 120. When the display screen 200 is in the extension position, the cover plate 400 covers a portion of the support 300 that extends out of the storage recess 120.

The cover plate 400 may be fixedly mounted on the display screen 200, that is, the cover plate 400 may flip together with the display screen 200. In addition, the cover plate 400 is connected to the side of the display screen 200 facing away from the display surface 210. In this way, when the display screen 200 is in the storage position, the cover plate 400 may also be located in the storage recess 120. Therefore, the cover plate 400 can be covered by the display screen 200, and the cover plate 400 is not exposed from the armrest body 100, thereby ensuring a neat overall appearance of the seat armrest 1. When the display screen 200 is in the extension position, the cover plate 400 can rotate with the display screen 200 and extend out of the storage recess 120, and the cover plate 400 can cover the portion of the support 300 that is exposed from the storage recess 120, preventing the user from directly viewing the support 300, thereby providing a more aesthetically pleasing appearance. In addition, this can also prevent the user from touching the support 300, and prevent hand pinching during rotation of the support 300, thereby improving safety.

In addition, the cover plate 400 may also be configured to be arc-shaped matching the arc-shaped plate section 310 of the support 300. In this way, space occupied by the cover plate 400 can be relatively small, making arrangement easy.

In some specific embodiments of the present disclosure, as shown in FIG. 21, FIG. 22, and FIG. 24, the posture adjustment assembly 2 further includes a slide rail bracket 500.

A relative position between the slide rail bracket 500 and the armrest body 100 is fixed. The slide rail bracket 500 is configured with an arc-shaped guide cavity 510. The arc-shaped plate section 310 of the support 300 is slidably fitted in the arc-shaped guide cavity 510 to define rotation of the support 300 around the central axis of the arc-shaped plate section 310. The central axis of the arc-shaped plate section 310 coincides with the flip edge 211 of the display surface 210. That is, the arc-shaped guide cavity 510 of the slide rail bracket 500 defines the rotation of the support 300 around the arc-shaped plate section 310, that is, around the flip edge 211 of the display surface 210.

In other words, a position of the slide rail bracket 500 remains unchanged during the flipping process of the display screen 200, the arc-shaped guide cavity 510 of the slide rail bracket 500 can guide the rotation of the support 300, and the slide rail bracket 500 can also serve to fasten and support the support 300. This allows an overall structure of the posture adjustment assembly 2 to be more stable and the rotation of the support 300 to be smoother, and further improves stability of the rotation of the display screen 200. In addition, the flip edge 211 of the display surface 210 is prevented from deflection, so that the display screen 200 better fits the screen mounting surface 110 during the flipping process.

Further, as shown in FIG. 21, FIG. 22, and FIG. 24, damping members 320 are arranged between the arc-shaped plate section 310 and an inner wall of the arc-shaped guide cavity 510. The damping members 320 each may be a damping sleeve, a spring, a damper, or the like. The damping member 320 is configured to apply a damping force to the rotation of the support 300. The arrangement of the damping member 320 can increase a damping force between the support 300 and the arc-shaped guide cavity 510, making the rotation of the support 300 more stable and preventing rapid rotation of the support 300. This allows the rotation of the display screen 200 to be smoother, making it easier for the user to adjust a rotation position of the display screen 200. Moreover, the damping member 320 can be used to absorb instantaneous impact on the display screen 200 or the support 300, thereby preventing the support 300 from breaking or being damaged. In addition, the damping member 320 can also eliminate a gap between the support 300 and the slide rail bracket 500 and tooth gaps within the posture adjustment assembly 2, thereby avoiding noise caused by any collision between the support 300 and the slide rail bracket 500 and noise of vibration.

Still further, as shown in FIG. 21, FIG. 22, and FIG. 24, the damping members 320 are respectively arranged on two axial sides of the arc-shaped plate section 310. In this way, there is a damping force between both the axial sides of the arc-shaped plate section 310 and the arc-shaped guide cavity 510, so that the damping force between the arc-shaped plate section 310 and the inner wall of the arc-shaped guide cavity 510 is more evenly distributed. This further improves rotational stability of the support 300, allows the display screen 200 to flip more stably and reliably, and prevents the display screen 200 from shaking, thereby providing a better viewing experience for the user.

For example, as shown in FIG. 21, FIG. 22, and FIG. 24, the damping members 320 each may be a damping sleeve. The damping members 320 each may be provided with a mounting groove 321 on a side facing the arc-shaped plate section 310. Insertion blocks 312 are arranged on the two axial sides of the arc-shaped plate section 310. The insertion blocks 312 may be inserted into the mounting grooves 321 of the damping members 320 to achieve fastening between the damping members 320 and the arc-shaped plate section 310. A thickness of the damping member 320 may be greater than a thickness of the arc-shaped plate section 310, and a thickness of the insertion block 312 may be less than a thickness of the remaining part of the arc-shaped plate section 310. The arc-shaped guide cavity 510 has a first arc-shaped guide wall 511 and a second arc-shaped guide wall 512. The first arc-shaped guide wall 511 and the second arc-shaped guide wall 512 are respectively arranged on two sides of the arc-shaped plate section 310 in a thickness direction of the arc-shaped plate section 310. Each of the damping members 320 is in contact engagement with the first arc-shaped guide wall 511 and the second arc-shaped guide wall 512.

This facilitates assembly of the arc-shaped plate section 310 and the damping members 320. Moreover, after the damping members 320 come into contact with the inner wall of the arc-shaped guide cavity 510, the arc-shaped plate section 310 is not in contact with the inner wall of the arc-shaped guide cavity 510. Therefore, wear between the arc-shaped plate section 310 and the arc-shaped guide cavity 510 can be avoided, and friction between the support 300 and the slide rail bracket 500 can be reduced, making it easier for the support 300 to rotate.

In addition, the arc-shaped guide cavity 510 can guide the two damping members 320 simultaneously, reducing an assembly error between the two damping members 320. This helps reduce transmission error between gears in the posture adjustment assembly 2.

According to some specific embodiments of present disclosure, as shown in FIG. 21, FIG. 22, and FIG. 24, the posture adjustment assembly 2 further includes a housing 600 and a drive mechanism 700.

The housing 600 is mounted on the armrest body 100. The drive mechanism 700 is mounted on the housing 600. The transmission mechanism 800 is in transmission connection with the drive mechanism 700 and the support 300. The drive mechanism 700 drives, through the transmission mechanism 800, the support 300 to rotate around the central axis of the arc-shaped plate section 310 to drive the display screen 200 to flip between the storage position and the extension position.

The drive mechanism 700 may be a motor. The posture adjustment assembly 2 can automatically drive, through the drive mechanism 700, the support 300 to rotate, thereby achieving automatic flipping of the display screen 200. Compared with manual flipping of the display screen 200, this operation is easier and faster, providing a better user experience.

Moreover, all components of the posture adjustment assembly 2, such as the drive mechanism 700, the transmission mechanism 800, and the support 300, may be mounted in the housing 600. The support 300 may be located in the housing 600 when the display screen 200 is in the storage position, and may extend out of the housing 600 when the display screen 200 is in the extension position.

For example, the posture adjustment assembly 2 may have a power-off reset function. When the vehicle is powered off, the transmission mechanism 800 drives the display screen 200 to automatically return to a horizontal state of the storage position.

According to some specific embodiments the present disclosure, as shown in FIG. 21, FIG. 22, and FIG. 24, the drive mechanism 700 is arranged at an end of the transmission mechanism 800 in its axial direction. In this way, a size of the posture adjustment assembly 2 in a direction perpendicular to the flip axis of the display screen 200 can be reduced, helping make the posture adjustment assembly 2 smaller, thereby enabling the posture adjustment assembly 2 to be suitable for an armrest body 100 whose size is relatively small in the direction perpendicular to the flip axis of the display screen 200.

According to some specific embodiments of the present disclosure, as shown in FIG. 24, the transmission mechanism 800 includes a gear sleeve 810.

The gear sleeve 810 is provided with fourth shaft holes 812. One end of the connecting rod 391 is provided with a fifth shaft hole 396. One end of the connecting rod 391 is rotatably connected to the gear sleeve 810 through a connecting rod shaft 397 fitting the fourth shaft hole 812 and the fifth shaft hole 396.

In this way, the posture adjustment assembly 2 can transfer power to the gear sleeve 810 through the drive mechanism 700 to drive the gear sleeve 810 to rotate, and then the gear sleeve 810 transfers power to the arc-shaped plate section 310 through the connecting rod 391. In this way, the support 300 can be driven to rotate to achieve flipping, extension, and accommodation of the display screen 200.

According to some specific embodiments of the present disclosure, as shown in FIG. 24, an outer circumferential surface of the gear sleeve 810 is provided with second lugs 813 arranged spaced apart along an axial direction of the gear sleeve 810. The second lugs 813 are each provided with a fourth shaft hole 812. One end of the connecting rod 391 is located between adjacent second lugs 813. Arranging one end of the connecting rod 391 between the adjacent second lugs 813 can implement a transmission connection between the gear sleeve 810 and the connecting rod 391. Moreover, the second lugs 813 can position the connecting rod 391 in the axial direction of the gear sleeve, thereby ensuring a relative position between the gear sleeve 810 and the connecting rod 391.

In some specific embodiments of the present disclosure, as shown in FIG. 24, the transmission mechanism 800 further includes a gear shaft 820 and a fastener 840.

The gear sleeve 810 is in transmission connection with the drive mechanism 700 through the gear shaft 820. An outer circumferential surface of the gear shaft 820 is provided with a ring piece 830. The gear sleeve 810 is sleeved over the gear shaft 820 and rotates synchronously with the gear shaft 820. The fastener 840 is mounted on the gear shaft 820. The gear sleeve 810 is defined between the ring piece 830 and the fastener 840 in an axial direction of the gear shaft 820.

In other words, the ring piece 830 and the fastener 840 are respectively located at two axial ends of the gear sleeve 810. In this way, the gear sleeve 810 can be axially limited by using the ring piece 830 and the fastener 840, to fix a relative position between the gear sleeve 810 and the gear shaft 820 in the axial direction of the gear shaft 820, preventing any positional wobbling of the gear sleeve 810, thereby helping make power transmission between the gear sleeve 810 and the support 300 more stable.

Further, as shown in FIG. 24, the transmission mechanism 800 further includes an elastic member 850. The elastic member 850 is sleeved over the gear shaft 820 and abuts between the gear sleeve 810 and the fastener 840.

For example, the elastic member 850 may be a spring. The spring is sleeved over the gear shaft 820 and located between the gear sleeve 810 and the fastener 840. Moreover, after the transmission mechanism 800 is assembled into place, the elastic member 850 may be in a compressed state, allowing the fastener 840 to press the gear sleeve 810 through the elastic member 850. This allows the gear sleeve 810 to be pressed between the fastener 840 and the ring piece 830, thereby further improving stability of position fixing of the gear sleeve 810, making the gear sleeve 810 less prone to axial wobbling along the axial direction of the gear shaft 820. Therefore, fitting between the gear sleeve 810 and the support 300 is more stable, and the transmission mechanism 800 can stably transfer power to the support 300, thereby driving the display screen 200 to flip stably.

In some specific embodiments of the present disclosure, as shown in FIG. 24, the transmission mechanism 800 further includes a spacer 860. The spacer 860 is sleeved over the gear shaft 820 and located between the elastic member 850 and the gear sleeve 810. In this way, the elastic member 850 can abut against the gear sleeve 810 through the spacer 860. The arrangement of the spacer 860 allows easier abutment against the elastic member 850, making the abutment between the elastic member 850 and the spacer 860 more stable. In addition, a contact area between the spacer 860 and the gear sleeve 810 is larger, enabling the elastic member 850 to reliably press the gear sleeve 810 against the ring piece 830, thereby further improving an axial fastening effect for the gear sleeve 810.

In some specific embodiments of the present disclosure, as shown in FIG. 24, the transmission mechanism 800 further includes a transmission block 870 and a friction piece 880.

The transmission block 870 is sleeved over the gear shaft 820. The transmission block 870 is located between the gear sleeve 810 and the ring piece 830 and rotates synchronously with the gear shaft 820. The friction piece 880 is arranged between the transmission block 870 and the gear sleeve 810. The transmission block 870 transfers rotation of the gear shaft 820 to the gear sleeve 810 through the friction piece 880.

It will be noted that friction between the friction piece 880 and the transmission block 870 and friction between the friction piece 880 and the gear sleeve 810 are both greater than a driving force required by the display screen 200 to flip. In this way, when the drive mechanism 700 proactively drives the display screen 200 to flip, the transmission block 870 can transfer power to the gear sleeve 810 through the friction piece 880, thereby driving the gear sleeve 810 to rotate to achieve the flipping of the display screen 200.

When the display screen 200 tends to flip under action of an external force, for example, when the user manually moves the display screen 200 or accidentally comes into contact with the display screen 200, if the external force is greater than the friction between the friction piece 880 and the transmission block 870, or if the external force is greater than the friction between the friction piece 880 and the gear sleeve 810, relative rotation occurs between the gear sleeve 810 and the friction piece 880 or between the friction piece 880 and the transmission block 870, causing the display screen 200 to be pushed by the external force to flip. Setting in this manner can prevent the display screen 200 from breaking or having a crack due to an excessively large external force after the transmission mechanism 800 locks the display screen 200.

In some specific embodiments of the present disclosure, as shown in FIG. 24, one of the ring piece 830 and the transmission block 870 is provided with clamping slots 831 and the other is provided with clamping teeth 871. The clamping teeth 871 are inserted into the clamping slots 831 to cause the transmission block 870 to rotate synchronously with the gear shaft 820.

For example, the ring piece 830 may be provided with the clamping slots 831 and the transmission block 870 may be provided with the clamping teeth 871. In this way, when the ring piece 830 rotates synchronously with the gear shaft 820, power can be transferred to the transmission block 870 through engagement between the clamping slots 831 and the clamping teeth 871, thereby allowing the transmission block 870 to rotate synchronously with the gear shaft 820. Moreover, through transmission engagement between the clamping slots 831 and the clamping teeth 871, power transmission between the ring piece 830 and the transmission block 870 is more stable and reliable.

Further, as shown in FIG. 24, the plurality of clamping slots 831 are spaced apart along a circumferential direction of the ring piece 830. The plurality of clamping teeth 871 are spaced apart along a circumferential direction of the transmission block 870. The plurality of clamping teeth 871 are inserted into the plurality of clamping slots 831 in a one-to-one correspondence. In this way, when the ring piece 830 transfers power to the transmission block 870, circumferential forces acting on the ring piece 830 and the transmission block 870 are more evenly distributed, allowing the power transmission between the ring piece 830 and the transmission block 870 to be more stable and reliable, thereby more effectively preventing power transmission failure between the ring piece 830 and the transmission block 870. For example, when one of the plurality of clamping teeth 871 and one of the plurality of clamping slots 831 are damaged and fail, the engagement between the remaining plurality of clamping teeth 871 and the remaining plurality of clamping slots 831 can still ensure the power transmission between the ring piece 830 and the transmission block 870.

In some other specific embodiments of the present disclosure, the transmission mechanism 800 further includes a transmission block 870 and a clutch apparatus 890.

The transmission block 870 is sleeved over the gear shaft 820. The transmission block 870 is located between the gear sleeve 810 and the ring piece 830 and rotates synchronously with the gear shaft 820. The clutch apparatus 890 is arranged between the transmission block 870 and the gear sleeve 810. The clutch apparatus 890 controls whether power is to be transferred between the transmission block 870 and the gear sleeve 810.

Specifically, when the clutch apparatus 890 is engaged, the clutch apparatus 890 can perform power transmission, that is, the transmission block 870 can transfer power to the gear sleeve 810 through the clutch apparatus 890 to drive the gear sleeve 810 to rotate, thereby enabling the drive mechanism 700 to drive the display screen 200 to flip. When the clutch apparatus 890 is disengaged, power transmission of the clutch apparatus 890 is stopped, that is, no power transmission is performed between the transmission block 870 and the gear sleeve 810. When the display screen 200 is manually flipped, a rotational force of the display screen 200 is not transferred to the transmission block 870 through the clutch apparatus 890, thereby protecting the drive mechanism 700.

In some specific embodiments of the present disclosure, as shown in FIG. 24, the outer circumferential surface of the gear shaft 820 is provided with a recess 821. The fastener 840 is a circlip. The circlip is engaged in the recess 821. In this way, the recess 821 can predetermine a position of the circlip, and after the circlip is engaged in the recess 821, the gear sleeve 810 can be axially limited.

In some specific embodiments of the present disclosure, as shown in FIG. 4 and FIG. 9, the drive mechanism 700 is a motor. The posture adjustment assembly 2 further includes a speed reduction and torque increase mechanism 900. The gear shaft 820 is in transmission connection with the drive mechanism 700 through the speed reduction and torque increase mechanism 900. The speed reduction and torque increase mechanism 900 includes a first-stage worm 910, a first-stage gear 920, a second-stage worm 930, and a second-stage gear 940.

The first-stage worm 910 is sleeved over a motor shaft of the motor and is driven by the motor shaft to rotate. The first-stage gear 920 is mounted on the housing 600 and engaged with the first-stage worm 910. The second-stage worm 930 is mounted on the housing 600 and rotates synchronously with the first-stage gear 920. The second-stage gear 940 is sleeved over the gear shaft 820 and rotates synchronously with the gear shaft 820. The second-stage gear 940 is engaged with the second-stage worm 930.

In this way, when needing to rotate the display screen 200, the user can start the drive mechanism 700, and the drive mechanism 700 can drive the first-stage worm 910 to rotate. In addition, power can be transferred to the transmission mechanism 800 sequentially through the first-stage worm 910, the first-stage gear 920, the second-stage worm 930, and the second-stage gear 940, and then, the transmission mechanism 800 drives the display screen 200 to flip. Moreover, through gear-tooth fitting of the speed reduction and torque increase mechanism 900, a rotational speed transferred from the drive mechanism 700 to the transmission mechanism 800 can be effectively reduced, thereby increasing torque transferred from the drive mechanism 700 to the transmission mechanism 800, allowing the display screen 200 to flip more stably.

Further, a central axis of the first-stage worm 910 coincides with a central axis of the motor shaft. A central axis of the first-stage gear 920 coincides with a central axis of the second-stage worm 930 and is perpendicular to the central axis of the first-stage worm 910. A central axis of the second-stage gear 940 coincides with a central axis of the gear shaft 820 and is perpendicular to the second-stage worm 930. In this way, the drive mechanism 700, the first-stage worm 910, the first-stage gear 920, the second-stage worm 930, and the second-stage gear 940 have a more compact structural layout, enabling the drive mechanism 700, the first-stage worm 910, the first-stage gear 920, the second-stage worm 930, and the second-stage gear 940 to occupy smaller space, thereby making the arrangement easy.

In some specific embodiments of the present disclosure, as shown in FIG. 24, one of the outer circumferential surface of the gear shaft 820 and an inner circumferential surface of the second-stage gear 940 is provided with transmission ribs 822 and the other is provided with transmission grooves 941. The transmission ribs 822 are inserted into the transmission grooves 941 to cause the second-stage gear 940 to rotate synchronously with the gear shaft 820.

For example, the outer circumferential surface of the gear shaft 820 may be provided with the transmission ribs 822 and the inner circumferential surface of the second-stage gear 940 may be provided with the transmission grooves 941. In this way, when the drive mechanism 700 operates, the second-stage gear 940 can transfer power to the gear shaft 820 through engagement between the transmission grooves 941 and the transmission ribs 822, thereby allowing the gear shaft 820 to rotate synchronously with the second-stage gear 940. Moreover, through transmission engagement between the transmission grooves 941 and the transmission ribs 822, power transmission between the second-stage gear 940 and the gear shaft 820 is more stable and reliable.

Further, as shown in FIG. 24, the plurality of transmission ribs 822 are spaced apart along a circumferential direction of the gear shaft 820. The plurality of transmission grooves 941 are spaced apart along a circumferential direction of the second-stage gear 940. The plurality of transmission ribs 822 are inserted into the plurality of transmission grooves 941 in a one-to-one correspondence.

In this way, when the second-stage gear 940 transfers power to the gear shaft 820, circumferential forces acting on the second-stage gear 940 and the gear shaft 820 are more evenly distributed, allowing the power transmission between the second-stage gear 940 and the gear shaft 820 to be more stable and reliable, thereby more effectively preventing power transmission failure between the second-stage gear 940 and the gear shaft 820. For example, when one of the plurality of transmission ribs 822 and one of the plurality of transmission grooves 941 are damaged and fail, the engagement between the remaining plurality of transmission ribs 822 and the remaining plurality of transmission grooves 941 can still ensure the power transmission between the second-stage gear 940 and the gear shaft 820.

In some specific embodiments of the present disclosure, as shown in FIG. 24, the transmission ribs 822 are each arranged on the outer circumferential surface of the gear shaft 820. The transmission ribs 822 each have a guide portion 823 at an end facing away from the gear sleeve 810. The guide portion 823 has a height gradually decreasing in a direction away from the gear sleeve 810. In this way, during assembly of the gear shaft 820 and the second-stage gear 940, the guide portion 823 can provide assembly guidance for the engagement between the transmission ribs 822 and the transmission grooves 941. This helps simplify steps of assembling the gear shaft 820 and the second-stage gear 940, making the assembly easier.

In some specific embodiments of the present disclosure, as shown in FIG. 21, FIG. 22, FIG. 25, and FIG. 26, the housing 600 is configured with a first limiting surface 601 and a second limiting surface 602. The support 300 abuts against the first limiting surface 601 when the display screen 200 flips from the extension position to the storage position. The support 300 abuts against the second limiting surface 602 when the display screen 200 flips from the storage position to the extension position.

In this way, a flip range of the display screen 200 can be determined to be from the storage position to the extension position, thereby preventing the display screen 200 from being damaged by excessive flipping.

According to some specific embodiments of the present disclosure, as shown in FIG. 21, FIG. 22, FIG. 25, and FIG. 26, the housing 600 has a first limiting rib 650 and a second limiting rib 660. The first limiting rib 650 and the second limiting rib 660 are arranged spaced apart. The connecting rod 391 is located between the first limiting rib 650 and the second limiting rib 660. The first limiting rib 650 and the second limiting rib 660 are each formed with a first limiting surface 601. The first limiting rib 650 and the second limiting rib 660 may be arranged on a mounting bracket 640 described below. A side of the mounting bracket 640 close to the display screen 200 is provided with the first limiting rib 650 and the second limiting rib 660.

The arrangement of the first limiting rib 650 and the second limiting rib 660 can ensure that stopping forces acting on the support 300 in its axial direction are more evenly distributed, preventing any deflection of the support 300. Moreover, the spaced arrangement between the first limiting rib 650 and the second limiting rib 660 provides sufficient space for the movement of the connecting rod 391, thereby preventing interference between the first limiting surface 601 and the connecting rod 391.

According to some specific embodiments of the present disclosure, as shown in FIG. 21, FIG. 22, FIG. 25, and FIG. 26, the support 300 is configured with a limiting block 341. The limiting block 341 abuts against the first limiting surface 601 when the display screen 200 flips from the extension position to the storage position. The limiting block 341 is arranged on a surface of the flat plate section 340 facing away from the display screen 200. Setting the limiting block 341 to fit the first limiting surface 601 can improve reliability of limiting.

Further, the support 300 further includes a limiting folding plate 330. The limiting folding plate 330 is connected to a side of the arc-shaped plate section 310 away from the display screen 200 in an arc length direction. The limiting folding plate 330 abuts against the second limiting surface 602 when the display screen 200 flips from the storage position to the extension position, resulting in more reliable positioning.

According to some specific embodiments of the present disclosure, as shown in FIG. 4 and FIG. 9, the housing 600 includes an upper cover 610, a lower cover 620, a mounting bracket 640, and a slide rail bracket 500.

The upper cover 610 and the lower cover 620 are connected to each other and jointly define a mounting cavity 630. The mounting bracket 640 is mounted on the lower cover 620 and located in the mounting cavity 630. The drive mechanism 700 and the transmission mechanism 800 are mounted on the mounting bracket 640. The slide rail bracket 500 is mounted on the mounting bracket 640. The slide rail bracket 500 and the lower cover 620 are respectively arranged on two opposite sides of the mounting bracket 640. The arc-shaped plate section 310 fits the slide rail bracket 500 to define rotation of the support 300 around the central axis of the arc-shaped plate section 310.

In this way, the upper cover 610 and the lower cover 620 can cover the drive mechanism 700, the transmission mechanism 800, the mounting bracket 640, the slide rail bracket 500, and other components and parts, allowing the posture adjustment assembly 2 to have a more aesthetically pleasing appearance. In addition, this can prevent the user from directly touching the drive mechanism 700 or the transmission mechanism 800, thereby improving safety. Moreover, the posture adjustment assembly 2 can further fasten the drive mechanism 700, the transmission mechanism 800, the slide rail bracket 500, and other components and parts by using the mounting bracket 640, allowing the components of the posture adjustment assembly 2 to be more stably connected and fastened. This manner of fastening a plurality of parts by one mounting bracket 640 reduces an assembly error and better controls a gear center distance, thereby appropriately reducing gear transmission noise.

The lower cover 620 and the mounting bracket 640 are mounted with a circuit board 950. The circuit board 950 is connected to the drive mechanism 700 to control the drive mechanism 700 to operate.

In some specific embodiments of the present disclosure, as shown in FIG. 2 and FIG. 3, the seat armrest 1 further includes a gesture acquisition apparatus 980.

The gesture acquisition apparatus 980 is connected to the posture adjustment assembly 2. The posture adjustment assembly 2 drives, based on gesture information acquired by the gesture acquisition apparatus 980, the display screen 200 to flip between the storage position and the extension position.

For example, the gesture acquisition apparatus 980 may be an infrared sensing module. In this way, the gesture acquisition apparatus 980 can acquire gesture information of a user, and the user can control accommodation and extension of the posture adjustment assembly 2 by using different gesture information, thereby controlling the display screen 200 to be accommodated, extended, or flipped to different angles. For example, when the user raises a hand, the display screen 200 can rotate upward following the gesture, and when the hand moves downward, the display screen 200 can rotate downward following the gesture. This further simplifies user operations, and the user does not need to switch the position of the display screen 200 by touching the display screen 200 or pressing a button, resulting in easier and faster operations, thereby helping improve operating experience of the user.

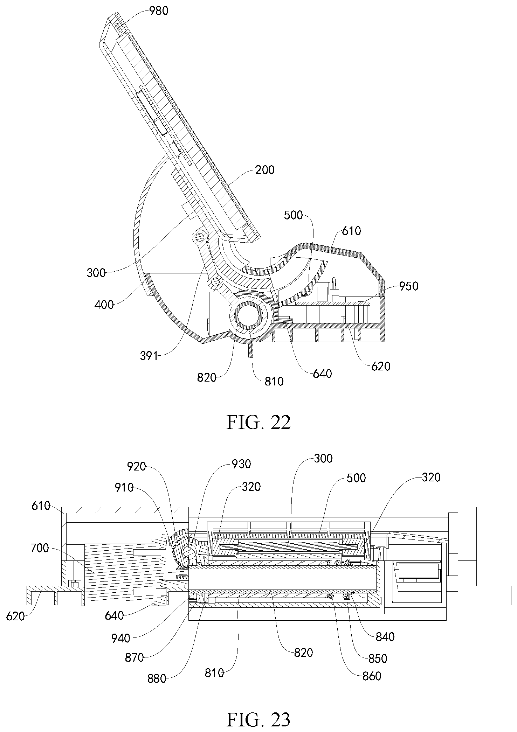

In some specific embodiments of the present disclosure, as shown in FIG. 21 and FIG. 22, the seat armrest 1 further includes a fingerprint acquisition apparatus 970. The fingerprint acquisition apparatus 970 may be a touchscreen.

For example, the fingerprint acquisition apparatus 970 can be exposed from the armrest body 100 to facilitate acquisition of user fingerprint information. The fingerprint acquisition apparatus 970 is connected to the posture adjustment assembly 2. The posture adjustment assembly 2 drives, based on fingerprint information acquired by the fingerprint acquisition apparatus 970, the display screen 200 to flip between the storage position and the extension position.

Specifically, when a different user saves information about the flip angle of the display screen 200, the user can record a fingerprint through the fingerprint acquisition apparatus 970. When the user uses the display screen 200 next time, the user presses a finger onto the fingerprint acquisition apparatus 970, and the fingerprint acquisition apparatus 970 can control, based on information about the fingerprint, the posture adjustment assembly 2 to drive the display screen 200 to flip to a position corresponding to the information about the fingerprint. In other words, the display screen 200 can have a plurality of memory positions. The plurality of memory positions respectively correspond to different fingerprint information. When a different user uses the display screen 200, the display screen 200 can flip to a flip angle corresponding to fingerprint information of the user, thereby further improving usage experience of the user.

Certainly, the same user can record a plurality of fingerprints. The plurality of fingerprints can respectively correspond to different flip angles of the display screen 200. When the user presses the fingerprint acquisition apparatus 970 with different fingers, the fingerprint acquisition apparatus 970 can control, based on acquired fingerprint information, the posture adjustment assembly 2 to rotate to drive the display screen 200 to flip to positions corresponding to the fingerprints of the fingers. In this way, the same user can also save a plurality of flip angles of the display screen 200. Therefore, usage requirements of different users are more effectively satisfied.

The following is a brief description of steps for the posture adjustment assembly 2 to drive the display screen 200 to flip in this embodiment:
first, the user starts the drive mechanism 700. The drive mechanism 700 drives the first-stage worm 910 to rotate. The first-stage worm 910 transfers power to the first-stage gear 920, the second-stage worm 930, and the second-stage gear 940 sequentially. The second-stage gear 940 rotates;
then, the second-stage gear 940 transfers the power to the gear shaft 820 and drives the gear shaft 820 to rotate synchronously. The ring piece 830 rotates synchronously with the gear shaft 820;
finally, the ring piece 830 drives, through the friction piece 880, the gear sleeve 810 to rotate. The gear sleeve 810 can drive the support 300 to rotate. The display screen 200 follows the support 300 to rotate, thereby enabling flipping of the display screen 200.

The following is a brief description of steps for assembling the posture adjustment assembly 2 in this embodiment:
first, after being connected, the drive mechanism 700 and the mounting bracket 640 are fastened with two screws;
then, the second-stage gear 940 is sleeved over the gear shaft 820, and then the transmission block 870, the friction piece 880, the gear sleeve 810, the spacer 860, and the elastic member 850 are sequentially sleeved onto the gear shaft 820. Subsequently, the fastener 840 is engaged into the recess 821 of the gear shaft 820 to form a transmission mechanism 800, and the assembled transmission mechanism 800 is fastened to the mounting bracket 640;
next, the lower cover 620, the first-stage gear 920, and the second-stage gear 940 are separately fastened to the mounting bracket 640;
then, the two damping sleeves are respectively sleeved over two axially opposite sides of the support 300 and mounted into the slide rail bracket 500, and then fastened to the mounting bracket 640 with screws;
finally, the upper cover 610 and the lower cover 620 are fastened, and then the support 300 and the cover plate 400 are sequentially connected to the display screen 200.

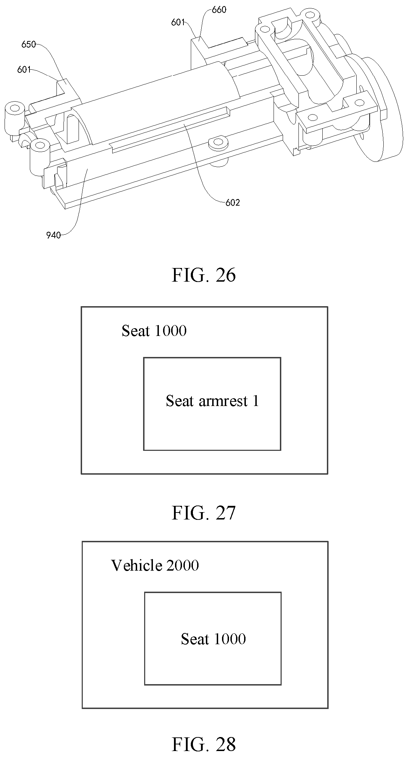

A seat 1000 according to an embodiment of the present disclosure is described below with reference to FIG. 27. The seat 1000 includes the seat armrest 1 according to the foregoing embodiment of the present disclosure.

In the seat 1000 according to this embodiment of the present disclosure, through use of the seat armrest 1 according to the foregoing embodiment of the present disclosure, the display screen 200 can be accommodated and lifted, and the display screen 200 requires relatively small space to move, offering advantages such as small occupation space, easy viewing, and clear and neat appearance.

A vehicle 2000 according to an embodiment of the present disclosure is described below with reference to FIG. 28. The vehicle 2000 includes the seat 1000 according to the foregoing embodiment of the present disclosure.

In the vehicle 2000 according to this embodiment of the present disclosure, through use of the seat 1000 according to the foregoing embodiment of the present disclosure, the display screen 200 can be accommodated and lifted, and the display screen 200 requires relatively small space to move, offering advantages such as small occupation space, easy viewing, and clear and neat appearance.

Other compositions and operations of the seat armrest 1, the seat 1000, the vehicle 2000, the posture adjustment assembly 2, and the seat armrest screen 3 according to the embodiments of the present disclosure are known to a person of ordinary skill in the art. Details are not described herein.

In the description of this specification, the description with reference to the terms such as "one embodiment", "some embodiments", "an example embodiment", "an example", "a specific example", or "some examples" means that the specific features, structures, materials, or characteristics described with reference to the embodiment or example are included in at least one embodiment or example of the present disclosure. In this specification, illustrative expressions of the foregoing terms do not necessarily refer to the same embodiment or example.

Although the embodiments of this disclosure are shown and described, a person of ordinary skill in the art will understand that various changes, modifications, replacements, and variations may be made to these embodiments without departing from the principles and objectives of this disclosure, and the scope of this disclosure is defined by the claims and equivalents thereof.

## Claims

1. A seat armrest (1), comprising:
an armrest body (100), the armrest body (100) having a screen mounting surface (110), and the screen mounting surface (110) being provided with a storage recess (120);
a posture adjustment assembly (2), the posture adjustment assembly (2) being arranged on the armrest body (100); and
a display screen (200), the display screen (200) having a display surface (210), the display screen (200) being mounted on the posture adjustment assembly (2), and the posture adjustment assembly (2) driving the display screen (200) to flip between a storage position and an extension position, wherein
when the display screen (200) is in the storage position, the display screen (200) is accommodated in the storage recess (120), and the display surface (210) is flush with the screen mounting surface (110); and when the display screen (200) is in the extension position, at least part of the display screen (200) is located outside the storage recess (120), an edge of the display surface (210) adjacent to the screen mounting surface (110) constitutes a flip edge (211), and the flip edge (211) is flush with the screen mounting surface (110).

2. The seat armrest (1) according to claim 1, wherein a flip axis of the display screen (200) coincides with the flip edge (211) of the display surface (210).

3. The seat armrest (1) according to claim 1 or 2, wherein the posture adjustment assembly (2) comprises:
a support (300), the support (300) being connected to the display screen (200), the support (300) comprising an arc-shaped plate section (310), the support (300) driving the display screen (200) to flip around a central axis of the arc-shaped plate section (310), and the central axis of the arc-shaped plate section (310) coinciding with the flip edge (211) of the display surface (210).

4. The seat armrest (1) according to claim 3, wherein when the display screen (200) is in the storage position, the arc-shaped plate section (310) is located inside the armrest body (100).

5. The seat armrest (1) according to claim 3 or 4, further comprising:
a cover plate (400), the cover plate (400) being mounted on the display screen (200), wherein
when the display screen (200) is in the storage position, the cover plate (400) is located in the storage recess (120); and when the display screen (200) is in the extension position, the cover plate (400) covers a portion of the support (300) that extends out of the storage recess (120).

6. The seat armrest (1) according to any one of claims 3 to 5, wherein the posture adjustment assembly (2) further comprises:
a slide rail bracket (500), a relative position between the slide rail bracket (500) and the armrest body (100) being fixed, the slide rail bracket (500) being configured with an arc-shaped guide cavity (510), and the arc-shaped plate section (310) of the support (300) being slidably fitted in the arc-shaped guide cavity (510) to define rotation of the support (300) around the central axis of the arc-shaped plate section (310).

7. The seat armrest (1) according to claim 6, wherein damping members (320) are arranged between the arc-shaped plate section (310) and an inner wall of the arc-shaped guide cavity (510), and the damping member (320) is configured to apply a damping force to the rotation of the support (300).

8. The seat armrest (1) according to claim 7, wherein the damping members (320) are respectively arranged on two axial sides of the arc-shaped plate section (310).

9. The seat armrest (1) according to claim 8, wherein the damping members (320) are damping sleeves, insertion blocks (312) are arranged on the two axial sides of the arc-shaped plate section (310), and the insertion blocks (312) are inserted into the damping sleeves; and
the arc-shaped guide cavity (510) has a first arc-shaped guide wall (511) and a second arc-shaped guide wall (512), the first arc-shaped guide wall (511) and the second arc-shaped guide wall (512) are respectively arranged on two sides of the arc-shaped plate section (310) in a thickness direction of the arc-shaped plate section (310), and each of the damping members (320) is in contact engagement with the first arc-shaped guide wall (511) and the second arc-shaped guide wall (512).

10. The seat armrest (1) according to any one of claims 3 to 9, wherein the posture adjustment assembly (2) further comprises:
a housing (600), the housing (600) being mounted on the armrest body (100);
a drive mechanism (700), the drive mechanism (700) being mounted on the housing (600); and
a transmission mechanism (800), the transmission mechanism (800) being in transmission connection with the drive mechanism (700) and the support (300), and the drive mechanism (700) driving, through the transmission mechanism (800), the support (300) to rotate around the central axis of the arc-shaped plate section (310) to drive the display screen (200) to flip between the storage position and the extension position.

11. The seat armrest (1) according to claim 10, wherein the transmission mechanism (800) comprises:
a gear sleeve (810), the gear sleeve (810) being in transmission connection with the drive mechanism (700), an outer circumferential surface of the gear sleeve (810) being provided with first engaging teeth (811), an outer circumferential surface of the arc-shaped plate section (310) being provided with second engaging teeth (311), and the first engaging teeth (811) being engaged with the second engaging teeth (311).

12. The seat armrest (1) according to claim 11, wherein the transmission mechanism (800) further comprises:
a gear shaft (820), the gear sleeve (810) being in transmission connection with the drive mechanism (700) through the gear shaft (820), and the gear sleeve (810) being sleeved over the gear shaft (820) and rotating synchronously with the gear shaft (820).

13. The seat armrest (1) according to claim 12, wherein the transmission mechanism (800) further comprises:
an axial limiting mechanism (801), the axial limiting mechanism (801) being arranged on the gear shaft (820) and fitting the gear sleeve (810), and the axial limiting mechanism (801) fixing a position of the gear sleeve (810) in an axial direction of the gear shaft (820).

14. The seat armrest (1) according to claim 13, wherein the axial limiting mechanism (801) comprises:
a ring piece (830), the ring piece (830) being arranged on an outer circumferential surface of the gear shaft (820); and
a fastener (840), the fastener (840) being mounted on the gear shaft (820), and the gear sleeve (810) being defined between the ring piece (830) and the fastener (840) in the axial direction of the gear shaft (820).

15. The seat armrest (1) according to claim 14, wherein the transmission mechanism (800) further comprises:
an elastic member, the elastic member (850) being sleeved over the gear shaft (820) and abutting between the gear sleeve (810) and the fastener (840).

16. The seat armrest (1) according to claim 15, wherein the transmission mechanism (800) further comprises:
a spacer (860), the spacer (860) being sleeved over the gear shaft (820) and located between the elastic member (850) and the gear sleeve (810).

17. The seat armrest (1) according to any one of claims 14 to 16, wherein the transmission mechanism (800) further comprises:
a transmission block (870), the transmission (870) block being sleeved over the gear shaft (820), and the transmission block (870) being located between the gear sleeve (810) and the ring piece (830) and rotating synchronously with the gear shaft (820); and
a friction piece (880), the friction piece (880) being arranged between the transmission block (870) and the gear sleeve (810), and the transmission block (870) transferring rotation of the gear shaft (820) to the gear sleeve (810) through the friction piece (880).

18. The seat armrest (1) according to claim 17, wherein one of the ring piece (830) and the transmission block (870) is provided with clamping slots (831) and the other is provided with clamping teeth (871), and the clamping teeth (871) are inserted into the clamping slots (831) to cause the transmission block (870) to rotate synchronously with the gear shaft (820).

19. The seat armrest (1) according to claim 18, wherein the plurality of clamping slots (831) are spaced apart along a circumferential direction of the ring piece (830), the plurality of clamping teeth (871) are spaced apart along a circumferential direction of the transmission block (870), and the plurality of clamping teeth (871) are inserted into the plurality of clamping slots (831) in a one-to-one correspondence.

20. The seat armrest (1) according to any one of claims 14 to 16, wherein the transmission mechanism (800) further comprises:
a transmission block (870), the transmission block (870) being sleeved over the gear shaft (820), and the transmission block (870) being located between the gear sleeve (810) and the ring piece (830) and rotating synchronously with the gear shaft (820); and
a clutch apparatus (890), the clutch apparatus (890) being arranged between the transmission block (870) and the gear sleeve (810), and the clutch apparatus (890) controlling whether power is to be transferred between the transmission block (870) and the gear sleeve (810).

21. The seat armrest (1) according to any one of claims 14 to 20, wherein the outer circumferential surface of the gear shaft (820) is provided with a recess (821), the fastener (840) is a circlip, and the circlip is engaged in the recess (821).

22. The seat armrest (1) according to any one of claims 12 to 21, wherein the drive mechanism (700) is a motor, the posture adjustment assembly (2) further comprises a speed reduction and torque increase mechanism (900), the gear shaft (820) is in transmission connection with the drive mechanism (700) through the speed reduction and torque increase mechanism (900), and the speed reduction and torque increase mechanism (900) comprises:
a first-stage worm (910), the first-stage worm (910) being sleeved over a motor shaft of the motor and being driven by the motor shaft to rotate;
a first-stage gear (920), the first-stage gear (920) being mounted on the housing (600) and engaged with the first-stage worm (910);
a second-stage worm (930), the second-stage worm (930) being mounted on the housing (600) and rotating synchronously with the first-stage gear (920); and
a second-stage gear (940), the second-stage gear (940) being sleeved over the gear shaft (820) and rotating synchronously with the gear shaft (820), and the second-stage gear (940) being engaged with the second-stage worm (930).

23. The seat armrest (1) according to claim 22, wherein a central axis of the first-stage worm (910) coincides with a central axis of the motor shaft, a central axis of the first-stage gear (920) coincides with a central axis of the second-stage worm (930) and is perpendicular to the central axis of the first-stage worm (910), and a central axis of the second-stage gear (940) coincides with a central axis of the gear shaft (820) and is perpendicular to the second-stage worm (930).

24. The seat armrest (1) according to claim 22 or 23, wherein one of the outer circumferential surface of the gear shaft (820) and an inner circumferential surface of the second-stage gear (940) is provided with transmission ribs (822) and the other is provided with transmission grooves (941), and the transmission ribs (822) are inserted into the transmission grooves (941) to cause the second-stage gear (940) to rotate synchronously with the gear shaft (820).

25. The seat armrest (1) according to claim 24, wherein the plurality of transmission ribs (822) are spaced apart along a circumferential direction of the gear shaft (820), the plurality of transmission grooves (941) are arranged along a circumferential direction of the second-stage gear (940), and the plurality of transmission ribs (822) are inserted into the plurality of transmission grooves (941) in a one-to-one correspondence.

26. The seat armrest (1) according to claim 24 or 25, wherein the transmission rib (822) is arranged on the outer circumferential surface of the gear shaft (820), the transmission rib (822) has a guide portion (823) at an end facing away from the gear sleeve (810), and the guide portion (823) has a height gradually decreasing in a direction away from the gear sleeve (810).

27. The seat armrest (1) according to any one of claims 10 to 26, wherein the housing (600) is configured with a first limiting surface (601) and a second limiting surface (602);
the support (300) abuts against the first limiting surface (601) when the display screen (200) flips from the extension position to the storage position; and
the support (300) abuts against the second limiting surface (602) when the display screen (200) flips from the storage position to the extension position.

28. The seat armrest (1) according to claim 27, wherein the support (300) further comprises a limiting folding plate (330), and the limiting folding plate (330) is connected to a side of the arc-shaped plate section (310) away from the display screen (200) in an arc length direction; and
the limiting folding plate (330) abuts against the second limiting surface (602) when the display screen (200) flips from the storage position to the extension position.

29. The seat armrest (1) according to any one of claims 10 to 28, wherein the posture adjustment assembly (2) further comprises:
a circuit board (950), the circuit board (950) being mounted on the housing (600) and connected to the drive mechanism (700); and
a potentiometer (960), the potentiometer (960) being mounted on the circuit board (950), the potentiometer (960) having a detection gear (961), and the detection gear (961) being engaged with the first engaging teeth (811) to detect rotation angle information of the gear sleeve (810) and save the rotation angle information to the circuit board (950).

30. The seat armrest (1) according to claim 29, wherein the housing (600) comprises:
an upper cover (610);
a lower cover (620), the upper cover (610) and the lower cover (620) being connected to each other and jointly defining a mounting cavity (630);
a mounting bracket (640), the mounting bracket (640) and the circuit board (950) being mounted on the lower cover (620) and located in the mounting cavity (630), and the drive mechanism (700) and the transmission mechanism (800) being mounted on the mounting bracket (640); and
a slide rail bracket (500), the slide rail bracket (500) being mounted on the mounting bracket (640), the slide rail bracket (500) and the lower cover (620) being respectively arranged on two opposite sides of the mounting bracket (640), and the arc-shaped plate section (310) fitting the slide rail bracket (500) to define rotation of the support (300) around the central axis of the arc-shaped plate section (310).

31. The seat armrest (1) according to any one of claims 1 to 30, further comprising:
a gesture acquisition apparatus (980), the gesture acquisition apparatus (980) being connected to the posture adjustment assembly (2), and the posture adjustment assembly (2) driving, based on gesture information acquired by the gesture acquisition apparatus (980), the display screen (200) to flip between the storage position and the extension position.

32. The seat armrest (1) according to any one of claims 1 to 31, further comprising:
a fingerprint acquisition apparatus (970), the fingerprint acquisition apparatus (970) being connected to the posture adjustment assembly (2), and the posture adjustment assembly (2) driving, based on fingerprint information acquired by the fingerprint acquisition apparatus (970), the display screen (200) to flip between the storage position and the extension position.

33. A seat (1000), comprising the seat armrest (1) according to any one of claims 1 to 32.

34. A vehicle (2000), comprising the seat (1000) according to claim 33.
